# EUROPEAN PATENT SPECIFICATION

(11) **EP 4 663 994 B1**
(45) Date of publication and mention of the grant of the patent: **28.10.2026**
(21) Application number: 24181233.8
(22) Date of filing: 10.06.2024
(51) Int. Cl.: F16L 33/035

(54) **DOUBLE RING CONNECTION CLAMP AND METHOD USING THE CLAMP TO CONNECT A FLEXIBLE TUBE TO A BARB CONNECTOR**
DOPPELRINGVERBINDUNGSKLEMME UND VERFAHREN ZUR VERWENDUNG DER KLEMME ZUR VERBINDUNG EINES FLEXIBLEN ROHRS MIT EINEM WIDERHAKENVERBINDER
COLLIER DE CONNEXION À DOUBLE ANNEAU ET PROCÉDÉ UTILISANT LE COLLIER POUR CONNECTER UN TUBE FLEXIBLE À UN CONNECTEUR À BARBE

(43) Date of publication of application: 17.12.2025
(73) Proprietor: SARTORIUS STEDIM FMT SAS, 13400 Aubagne (FR)
(72) Inventor: BLAKE, Florian, 13600 LA CIOTAT (FR); HALIN, Mickael, 13600 LA CIOTAT (FR); DELASALLE, Brice, 13600 LA CIOTAT (FR)
(74) Representative: Novagraaf International SA

(56) References cited:
- EP-A1- 1 128 112
- US-A- 5 725 185
- US-B2- 8 864 182

## Description

### FIELD OF THE INVENTION

The instant disclosure, in the field of fluid connections systems, relates to clamps of annular structure with an adjustable clamp inner circumference for pinching-off elongated hollow objects, so that pressure remains applied to maintain a flexible tubular object such as hose, tube or the like, against a barb connector. The invention is directed to a double ring connection clamp, compatible for use in the biopharmaceutical or bioprocess industry. A fluid connection assembly including such connection clamp and a method for connecting a flexible tube to a barb connector, using the double ring connection clamp, are also provided.

### TECHNICAL BACKGROUND

Hoses or tubes carrying biopharmaceutical fluid are commonly used for interconnecting flexibles pouches or similar parts of a circuit. The term "biopharmaceutical fluid", in the following, is understood to mean a product of biotechnology (culture media, cell cultures, buffer solutions, artificial nutrition liquids, blood products and blood product derivatives) or a pharmaceutical product or more generally a product intended for use in the medical field. In such field, the operators must secure the hose end to a fitting or connector, with use of a clamping device. The hoses or tubes may be involved for connection to an inlet or outlet of a bioreactor or the like, for instance for single-use applications, with the inlet or outlet having a barb connector. More generally, tubing systems can include fluid connection components such as barbed fittings or connectors and one or more tubing retainers that encircle the overlapping region.

The tube retainers, which may be designed as cable ties, serve to prevent inadvertent disconnection of a tubing end from a barbed fitting to which it is connected. The plastic or metal ties can be of simple design, with a flexible structure while allowing adjustment in the final inner circumference forming the clamping region. When having an elongated flexible tie structure, the mounting of the tube retainer may require fastidious handling and clamping, possibly with a cut to prevent interference with other parts of the fluid circuit.

Snapper hose clamps, having a pair of interlocking jaws with teeth or similar double tooth design, have been proposed to have possibility for an adjustment of inner circumference, while allowing quickly and securely fastening a flexible hose about a barb connector. Document US4128918A shows an adjustable plastic clamp with tooth design adapted to prevent separation of the interlockable end members other than by transverse shear. These clamps can withstand high internal hose pressure and may evenly apply pressure to the hose being clamped. However, fitting of such clamp is not particularly simple and it may be not properly positioned with respect to an annular bulge region of a hose through which a barb connector is inserted. The document US5725185A discloses a further example of adjustable plastic clamp with tooth design.

More generally, there is still room for improvement regarding constructions of hose clamps.

### OBJECTS AND SUMMARY

For improving situation, embodiments of the invention provide a connection clamp (unitary clamp, typically made of a single piece) for tightly clamping a flexible tube connection, in particular tube connection using a barb connector (for maintaining the tube over the barb connector), the connection clamp comprising:
- a first clamping element, provided with a first ring part (C-shaped ring part) and two first interlocking elements at the respective ends of the first ring part, the first clamping element forming a first ring of adjustable inner circumference in a closed configuration of the first clamping element;
- a second clamping element consisting of a second ring part (other C-shaped ring part) and two second interlocking elements at the respective ends of the second ring part, the second clamping element forming a second ring of adjustable inner circumference in a closed configuration of the second clamping element;
- a first bridging portion interposed between the first clamping element and the second clamping element;

wherein the first clamping element and the second clamping element have an annular structure, each extending around a shared longitudinal axis, to form a pair of annular clamping areas that are spaced;
wherein the two first interlocking elements comprise: a first pair of jaws radially-spaced to define a first space therebetween, including a first set of teeth ; a first tongue member having a first complementary set of teeth; and a radial spacing at the first space so that the first tongue member can engage and has an inserted configuration inside the first space, in the closed configuration of the first clamping element,
wherein the two second interlocking elements comprise: a second pair of jaws radially-spaced to define a second space therebetween, including a second set of teeth; a second tongue member having a second complementary set of teeth , the second tongue member extending parallel to the first tongue member; and a radial spacing at said second space so that the second tongue member can engage and has an inserted configuration inside the second space, in the closed configuration of the second clamping element;
wherein the first bridging portion is a rigid portion that:
   - fixedly connects the first pair of jaws to the second pair of jaws, and
   - maintains a predetermined spacing between the first pair of jaws and the second pair of jaws.

The connection clamp is user-friendly, possibly using a single hand to grasp the clamp and actuate a clamping. The use of one or more bridging portions, each rigid and radially spaced away from the contact area with the tube, facilitates the installation and actuation:
- no loop formation steps is required (unlike the handling of flexible cable ties that initially extend straight);
- no need for cumulating two encircling operations (unlike use of two separate clamps);
- grasping of the connection clamp and actuation to reduce the connection clamp circumference can be advantageously performed on a same side, which corresponds to the open side of the C-shaped ring parts, the actuation possibly involving a simple gesture.

The connection possibly allows simultaneous engagement of the tongue members, for instance when having a second bridging portion linking the tongue members. In a variant, a difference in the clamping action may be exerted when having only one bridging portion, with possibility to firstly close the first clamping element and then close the second clamping element. An independent closing of the rings over the end of a flexible tube may be obtained, for instance with possibility to squeeze more over a tube area not overlapping the connector when the barb is located at the end of the connector.

The first tongue member may extend along a tongue member longitudinal direction. An open jaw mouth is delimited by free ends of the jaws of the first pair, the open jaw mouth having a radial spacing and width allowing the first tongue member to be inserted in the tongue member longitudinal direction through the open jaw mouth, so that the first tongue member can have the inserted configuration inside the first space. Similarly, with a radial spacing at the second space, another open jaw mouth is delimited by free ends of the jaws of the second pair, preferably with same radial spacing and width as in the jaws of the first pair, whereby the second tongue member can be inserted through said other open jaw mouth, the second tongue member also being displaceable (being moved tangentially/ substantially along the tongue member direction) to have an inserted configuration inside the second space.

With such clamp arrangement combining two ring structures and two sets of interlocking elements, the mounting of the connection clamp is simple, robust, obtained without cutting operation, while allowing a proper fitting. When surrounding a flexible tube and a barb connector (or similar connector providing retaining area thanks to an arrangement of relief(s), suitable positioning of the two clamping elements can be quickly obtained in view of position of an annular radial bulge or similar local annular expansion area of the tube. Indeed, due to the spacing between the clamping elements, the operator can easily and directly see how to position the clamping elements on both sides of the annular radial bulge.
The first bridging portion can provide a suitable spacing between the clamping elements, for instance with spacing superior to 5 or 6 mm and inferior to 22 mm, preferably comprised between 9 and 16 mm.

The connection clamp can form a double loop in the closed configuration, with limited displacement of the respective tongue members that can extend radially away (more externally) from inner encircling regions/clamping areas. Each outer jaw may be connected to an inner jaw by a radial junction member that allows a rear pushing of both pairs of jaws. Due to its generally annular structure, the connection clamp has two ends (connection clamp ends) that are preferably mutually facing in an expanded or spread configuration. A first connection clamp end includes the tongue members, while the second connection clamp end includes the first and second pair of jaws. In other words, the first connection clamp end and the second connection clamp end may be spaced apart in the expanded state of the connection clamp, which is an open state of the clamping device, facilitating sliding/passing the hose through the central passage delimited by the first and second ring parts.

In embodiments of the connection clamp, the two clamping elements may be provided with a double ring structure that is:
- locally rigid, for instance at least at the connection clamps ends;
- provided, for each clamping element, with a curved portion (in the ring part) at the opposite from the interlocking elements, the curved portion having a radius of curvature that is decreased when passing from the spread configuration of the ring part to a closed configuration;
- configured so that the initial curvatures for the ring parts are identical;
- provided with a symmetry plane, splitting the he connection clamp in two halves, for instance so that the first clamping element belongs to a first half and the second clamping element belongs to a second half (this plane typically being symmetry plane of the connection clamp).
- configured to allow modifying (only modifying) a/the radius of curvature of the ring part;
- adapted to only be deformable at the ring parts, to allow a change in radius of curvature of the ring part.

The radial spacing at said first space and at the second space may be lower than spacing distance between the clamping elements, which is preferably a constant distance. Besides, the structure of the connection clamp, possibly with a minimal thickness of plastic material (superior or equal to 1 mm for instance), is not deformable along direction of the longitudinal axis. A longitudinal pushing to displace one of clamping elements thus means the other clamping element is displaced identically, without any relative twisting between these clamping elements.
The two clamping elements may be spaced, with the gap maintained constant due to absence/lack of deformability of the ring parts along direction of the longitudinal axis.

Typically, the first bridging portion is arranged radially away from the first ring part and the second ring part, to prevent any first bridging portion contact on the flexible tube of the flexible connection. For instance, the first bridging portion may be radially connected to two parallel jaws of one of the connection clamp ends (possibly the second end).
Junction members that are radial spacers can interconnect the first bridging portion to the two parallel jaws. As a result, the first bridging portion may define/delimit an inner face, facing the flexible tube, that is radially shifted outwardly relative to the two parallel jaws that carry the first bridging portion.

In each clamping element, the interlocking elements can consist of two ring attachment end parts, for instance with the two ring attachment end parts distributed in different connection clamp ends. Shoulders, providing a radial shifting, can be provided so that the interlocking elements can have upper members or jaw members connected to a distal end of a corresponding shoulder. The outer jaws and the tongue members can form such upper members, with connection to a distal end of shoulders that have each a proximal end joining the corresponding ring part (first ring part or second ring part).
The angular extension of the ring parts, which can be the same between the first connection clamp end and the second connection clamp end, may be superior or equal to 220°, possibly superior or equal to 240°, in an open, spread configuration of the connection clamp.

The first bridging portion is bridging two parallel jaws, by continuously extending in /covering an angular sector of the connection clamp that is superior to 20°, for instance comprised between 26° and 85° in spread/expanded configuration, more preferably between 30° and 80°. The first bridging portion can follow curvature of a connection clamp inner face, as provided in same angular sector as the first bridging portion.
The first tongue member and the second tongue member may extend over an angular sector that is also more the 20°, typically more than 26 or 30°, possibly without exceeding 80 or 85°. The curved tangential extension of these parts of the interlocking elements may vary or slightly vary, for instance with the first bridging portion covering an angular sector greater than the tongue members or inversely (with the tongue members comparatively more elongated).

In preferred embodiments, the first bridging portion is a raised portion, not filling a gap between the two radially inner jaws. The first bridging portion can extend away (radially away) from a pair of parallel arcuate contact faces that are included in two radially inner jaws, which are provided at a same end of the connection clamp.

The tongue members may be each arranged as a part of a complementary pair of jaws, (a given pair of complementary jaws being designed for engagement with one amongst the first pair and the second pair of jaws).
Additionally or alternatively, either the first bridging portion forms a common guide for guiding of the first tongue member and the second tongue member, with the first bridging portion interposed between the first space and the second space in the closed configuration, or a second bridging portion rigidly connects the first tongue member and the second tongue member, possibly with a guiding of the second bridging portion allowed by the first bridging portion.

In embodiments of the connection clamp, the first bridging portion may be provided with one or more of the following features:
- the first bridging portion has two connection sides (preferably parallel) for connection with the first pair of jaws and the second pair of jaws, respectively.
- the two connection sides are each provided adjacent to a tooth section or above a tooth section, the first bridging portion having an outer face extending radially beyond each tooth section provided at same connection clamp end.
- the first bridging portion includes or consists of a flat arcuate portion.
- the flat arcuate portion is part of a bridge member raised relative to the two connection sides, due to two radial spacing members that extend each, respectively, between one of the two connection sides and the first bridging portion.
- a rear pressing surface is provided at the opposite of front free ends of the jaws of the two pair of jaws, the rear pressing surface being either comprised of two pressing surfaces distributed in a rear radial junction of the first pair and in a rear radial junction of the second pair, or under form of a continuous pressing surface at a common radial junction of the first pair and the second pair (pairs of jaws).
- the first bridging portion is carried either by the two parallel inner jaws, or by the parallel outer jaws, of the two pairs of jaws.
- the first bridging portion has a radially-inner face that has a concave curvature or concave profile as viewed in a cross-section parallel to direction of the shared longitudinal axis.
- the first bridging portion is selectively connected to the two radially inner jaws (typically in a given connection clamp end, the inner jaws being one jaw of the first pair of jaws and another jaw of the second pair of jaws), with no part of the connection clamp being engaged underneath the first bridging portion in closed configuration, whereby an inner face of the first bridging portion clears/delimits a gap portion between the two inner jaws.

The connection clamp has a front-rear extension that corresponds to an alignment direction of the passages for the hose. In other words, the longitudinal axis can be seen as defining the front-rear direction. The clamping elements are spaced along such front-rear or longitudinal direction and the upper jaws (radially away from the passages) extend higher than the lower jaws, both in the expanded state of the clamp and in the closed state/configuration. Each bridging portion, provided in a connection clamp end, away from the ring parts, can have width along the front-rear direction and a length that is superior to the width, for instance at least twice superior to the bridging portion width.

In options, the first bridging portion is:
- as wide as a longitudinal spacing (measured along the longitudinal spacing) between the two ring parts,
- and/or not exceeding width of the interspace between the clamping elements.
The tongue members may be rigid, having each a curved face having same curvature profile as a radially inner face and/or a radially outer face of the first bridging portion.

In embodiments involving a first bridging portion and two tongue members that can be inserted simultaneously in the first space and in the second space, respectively, the connection clamp can be provided with one or more of the following particular features:
- a second bridging portion that fixedly connects the first tongue member to the second tongue member,
- the second bridging portion maintains a predetermined spacing between the first tongue member and the second tongue member.
- the second bridging portion is rigid (rigidly connecting the tongue members).
- the first complementary set of teeth and the second complementary set of teeth are simultaneously interengaging, respectively with the first set of teeth and the second set of teeth, to maintain a closed configuration of the connection clamp.

Optionally, the first bridging portion and the radially inner jaws can form a rigid lower part of a connection clamp end, extending below the first space and the second space, so that in closed configuration of the connection clamp, another rigid part consisting of the second bridging portion and the tongue members can overlap the rigid lower part and extend in both the first space and the second space.
The second bridging portion and the tongue members can be designed as a single inserting part configured to be inserted between the radially inner jaws of the two pairs of jaws.

In spread configuration (typically corresponding to an initial state/configuration, before any actuation/clamping) of the connection clamp, each of the first clamping element and the second clamping element has a predetermined annular shape or C-shape, being continuously curved to extend around the shared longitudinal axis. It is understood the initial configuration may be a by default configuration with the ring parts having their C-shape, i.e. before any bending action exerted to obtain a connection at one or more of the interlocking elements. The distance between the pair of jaws may be superior to 8 mm, this distance being preferably equal to a constant distance/interspace between the ring parts.

In particular embodiments of the connection clamp, the teeth allow adjusting a clamping of the connection clamp, whereby disconnection of the interlocking elements is prevented. At least four, five or six teeth may be provided to form a tooth section, preferably without interruption/flat section.
at least five teeth may be distributed tangentially on an inner face, preferably facing radially inward, of each of the tongue members.
In variants, at least five teeth may be distributed tangentially on an inner face, preferably facing radially inward, of each of the lower jaws (radially inner jaws) or similar lower members that are formed in recessed interlocking elements.

Each of the first clamping element and the second clamping element is deformable between a spread configuration and an adjustable retracted configuration. Adjustment can be simultaneous for these clamping elements in some options, when joining means are provided to have the first tongue and the second tongue movable in unison, in same connection clamp end.
More generally, the two first interlocking elements and the two second interlocking elements can be configured to maintain the retracted configuration, respectively of the first clamping element and the second clamping element.

The connection clamp can be provided with one or two tabs, each protruding radially outward from an outer radial face provided in the interlocking elements, possibly with a tab protruding from the first bridging portion. In some options, the first bridging portion is provided with a first radial tab, while the second bridging portion is provided with a second radial tab. Thanks to the first radial tab and the second radial tab, the first connection clamp end (including the tongue members) and the second connection clamp end, provided with the first and second pairs of jaws, can be movable simultaneously using the first and second radial tabs. These connection clamp ends may be pushable into one another in a tangential direction, thereby being latchable with one another.

The first radial tab may be distal from free ends of the first and second tongue members, while the second radial tab may be formed adjacent to upper free ends of the first and second pairs of jaws. The first radial tab can be part of the bridge member. The first radial tab can optionally also form a transverse face that extends from the first pair of jaws to the second pair of jaws. This transverse face may face a second bridging portion in the spread configuration, with this transvers face having a U-shape, opening radially inward, to allow a second bridging portion to engage inside a cavity or groove of the first bridge member (below the first bridging portion), being guided by the U-shaped section of the groove.
More generally, tabs or similar protrusions can form ergonomic graspable parts distributed on both connection clamp ends, to help grab and close the double ring connection clamp with a pair of fingers and/or with a tool. The use of a tool can optionally allow control a final gap between the tabs and/or control the closing force, thus guarantying a given pressure level for a given set of hose and barb connector.

In embodiments allowing the bridging portions to overlap in the closed configuration, one or more of the following features may be provided:
- the second bridging portion delimits a groove/channel or rail, guiding the first bridging portion.
- the second bridging portion and the first bridging portion are in an overlapping configuration in the closed configuration, preferably selectively at the interspace between the first and second clamping elements.
- the second bridge is inserted between the first pair of jaws and the second pair of jaws, while the tongue members are respectively inserted in the first space and in the second space (simultaneous insertion of these parts).

In a spread configuration (which is typically a predefined/initial configuration) of the connection clamp, the first bridging portion and the second bridging portion, preferably of same width, can provide a same spacing:
- between the pairs of jaws, on the one hand;
- and between the tongue members, on the other hand.
This spacing is a spacing along a tangential direction (tangential spacing).

Due to adjustability of the circumference formed by the generally annular structure of the connection clamp, the connection clamp can have:
- an initial expanded configuration, in which the first tongue member is spaced from the first pair of jaws by a first predefined spacing distance, while the second tongue member is spaced from the second pair of jaws by a second predefined spacing distance, with the first predefined distance and the second predefined distance being equal.
- a modified configuration, allowing clamping of the flexible tube against a barb connector, possibly with only one the spaced clamping elements surrounding the connector beyond the barb (at the opposite from a free end of the connector), the circumference for the clamping effect being adjusted, for each clamping element as a function of the number of the teeth of the respective tongue members that are engaged in the first space or in the second space.

Besides, the first predefined distance and the second predefined distance may be inferior to a constant spacing distance, measured along direction of the longitudinal axis, delimited between the first ring part and the second ring part.
Each of the connection clamp ends may have an extension, as measured along a circumferential direction/tangent, that is at least three times superior to the radial spacing provided in the first pair and second pair of jaws, for instance at least four times superior.

The first tongue member and the second tongue member may be separated by an empty space or may be joined, for instance using a second bridging portion. In any of these options, the first tongue member and the second tongue member can be part of another pair of jaws, provided in a connection clamp end that is at the opposite from a connection clamp end provided with the first bridging portion.
In the other pair of jaws, the inner jaws may each provide a radial inner face for contact with the flexible tube, the inner jaws being thinner than the tongue members and configured to be interposed radially, in a closed configuration, between the flexible tube to be clamped and the radially inner jaws of the two pairs of jaws.

According to a particular feature, the first tongue member and the second tongue member are radially outer jaws in the other pair of jaws.
When present, the second bridging portion is arcuated. This arcuated portion can be inserted into a channel or grove delimited by the first bridging portion, when passing from the spread configuration to a closed configuration of the connection clamp.

The teeth in the tongue members may all have same general orientation, for instance protruding radially outward or protruding radially inward. In some embodiments, for the two first interlocking elements and for the two second interlocking elements as well:
- each pair of jaws includes a radially-inner jaw having a radially-outer face provided with one of the first and second sets of teeth that cooperates, in a closed configuration of the connection clamp, with inwardly orientated teeth that are part of one of the first complementary set of teeth (in the first tongue member) and the second complementary set of teeth (in the second tongue member), respectively.
Additionally or independently, the inwardly orientated teeth can be distributed on two radially-inner faces, typically parallel and preferably arranged at same radial distance from the longitudinal axis, which are:
- a radially-inner face of the first tongue member; and
- a radially-inner face of the second tongue member.

The connection clamp may form a barb clamp of non-metal material for connecting the flexible tube to a barb fitting that defines the barb connector. The barb fitting has a first end attachable to or included to a biopharmaceutical fluid containing device and a second end insertable into the flexible tube, the second end having a barb. The first clamping element and the second clamping element are parts of the barb clamp that are engageable (thus being in contact with the flexible tube at a clamping stage) over the second end of the barb fitting and the tube, with the first clamping element and the second clamping element being adapted to be arranged on both sides of the barb.

Some parts of the connection clamp may be included in a same piece or block to prevent disconnection of any of these parts (single-piece construction). For instance, the first bridging portion, the first clamping element and the second clamping element belong to a single piece made of plastic material. The single piece can be a molded piece, preferably of a thermoplastic material. More generally, the connection clamp may have two connection clamp ends to provide a retaining effect with a closed configuration maintained, the connection clamp including two annular retaining surfaces, parallel, for contacting and maintaining a tube over a barb connector, with the first bridging portion:
- integrally constructed with one of the two connection clamp ends;
- being radially spaced, outward, relative to the two annular retaining surfaces, so that the first bridging portion is either guiding the other connection clamp end formed as a single block (block that includes the first tongue member and the second tongue member), or is forming a guiding rail interposed between and guiding the first tongue member and the second tongue member that are separately insertable in the first space and in the second space, respectively. The first bridging portion may have a centering effect for the other connection clamp end, ensuring the two row of teeth distributed in the tongue members remain parallel to the rows of teeth provided in the two pair of jaws.

According to a further aspect of the disclosure, embodiments provide a fluid connection assembly, comprising:
- a barbed connector having a barb;
- a flexible tube having a connecting end into which the barbed connector protrudes, so that a circumferential radial bulge is formed due to compression of the flexible tube by the barb; and
- the connection clamp as above defined that is mounted around the flexible tube and the barbed connector, to maintain the flexible tube against the barbed connector;
wherein the circumferential radial bulge is housed in an annular gap provided between the first clamping element and the second clamping element, the first bridging portion being radially shifted outward relative to ring parts, in order to not contact and interfere with the circumferential radial bulge, the first bridging portion entirely extending radially away from the flexible tube.

With such arrangement, a single clamp, typically formed as a single plastic component/piece, can be clampable with the first bridging portion reinforcing the fastening area. As the bulge can be received at the interspace/middle annular empty region of the inner face of the connection clamp, the fluid connection assembly can provide an alignment of the respective locking interfaces, distributed on either sides of the annular radial bulge. Incorrect engagement of the teeth can be prevented by having:
- a stiffening effect, limiting risk of deviation or disconnection (which means loss of integrity of the connection);
- and typically, a guiding effect provided by the first bridging portion.

Also, the connection clamp may prevent risk of clamping too much at a side of the flexible tube clamped outside the barbed connector (without the barb and connector free end underneath the tube), as a part of the clamping can be driven by the closure limit of the ring part on the other side (beyond the barb and around the connector).
The connection clamp can be optionally symmetrical, thus having a middle section, between the clamping elements, that clears (is not interfering with) the barb-induced bulge on the hose/tube.

In the fluid connection assembly, the first bridging portion is radially shifted outward relative to ring parts, in order to extend at least as far radially from the flexible tube as a teeth engagement area of the first and second interlocking elements. The fluid connection assembly may be advantageously robust, sustaining high pressures, without drawback of altering the flexible tube at the portion deformed by the barb (the connection clamp having the suitable spacing/clearance with respect to the bulge covering the barb).

According to embodiments, the first bridging portion has a radially inner face delimiting a gap section of the annular gap so that a minimal radial distance between the radially inner face and the barb is greater or equal to twice an average thickness of the first and second ring parts. This minimal radial distance can be measured substantially in a symmetry plane of the connection clamp intersecting the first bridging portion and perpendicular to the longitudinal axis.

A second bridging portion can co-act with the first bridging portion to guide the tongue members and prevent any deviation along front-rear direction of the connection clamp. More generally, when having a second bridging portion also fixedly (rigidly) connecting the tongue members:
- not only the connection clamp can be clamped by a single gesture, since the first and second tongue members are joined to have a synchronized insertion (in the first space and in the second space delimited by the pairs of jaws),
- but also a better grasping may be provided for the connection clamp end including this second bridging portion, for instance by having a hollow or a protrusion (such as protruding tab), enhancing the actuation at such end.

Alternatively, when not having any second bridging portion, a clamping in series may occur. By having the first and second tongue members not joined, independent closing may be implemented without involving a long displacement/stroke for the respective tongue members. Indeed, the first tongue member and the second member can advantageously already be parallel and facing the corresponding space (first space or second space), due to the annular configuration (by-default configuration) of the ring parts.

According to another aspect, a method is provided for connecting a flexible tube to a connector that is barbed. The method comprises:
- providing the connector protruding into an end of the flexible tube, whereby a circumferential radial bulge is formed due to compression of the flexible tube by a barb of the connector;
- providing a connection clamp (as above defined) around the flexible tube and the barbed connector, the first interlocking elements and the second interlocking elements of the connection clamp being connected and locked to each other after positioning the first clamping element and the second clamping element respectively on both sides relative to the circumferential radial bulge;
wherein the flexible tube is clamped by the connection clamp selectively at two annular clamping areas that are spaced apart by a given distance along the longitudinal axis, due to two respective annular contacts of the first clamping element and the second clamping element onto the flexible tube.

The method is user-friendly in the context of tube connection systems including a barb connection. It can be applied for connecting variable tube dimensions with different material and ensures a tight and robust connection, in particular by avoiding tube swelling due to pressure (thanks to the clamping contact regions of annular shape that are suitably longitudinally spaced, thus with ring closure and clamping effect obtained just downstream and upstream the barb, along the longitudinal axis).

With such construction, the connection clamp may combine advantages of a quick and robust fastening. The location of the first bridging portion can be adapted to overlap with a radial distance the annular radial bulge, while the spacing between the ring parts, both in spread configuration and in closed position, facilitates the correct positioning of the clamping elements on both sides of the barb.
Of course, the method could also be similar, using a three-ring structure with two first bridging portions at a connection clamp common end, for a case where a clamping can be provided with two spaced radial bulges due to two successive barbs of the connector.

According to a particular feature, the clamping step by the connection clamp is locked by respective locks formed by the pair of jaws (where the tongue members are retained). In some variants, all or part of the interlocking elements can be releasable securing elements. Options with the interlocking elements not allowing any disconnection can be preferred for single-use applications: each tongue member and the complementary recessed securing section (pair of jaws) are configured to interlock irreversibly (thus without ability to re-obtain the expanded state, unless breaking part(s) or irreversibly deforming the device), the clamp being adapted for a single-use (single-use device).

### BRIEF DESCRIPTION OF THE DRAWINGS

The figures of the drawings are now briefly described.
Fig. 1 is a perspective view of a first embodiment, in expanded state, of a connection clamp suitable for maintaining a flexible tube (carrying fluid) against a barb of a connector passing through the two annular ring parts of the connection clamp.
Fig. 2 is a side view of the connection clamp of Fig. 1, in the initial spread/expanded state, with each connection clamp end elongated to provide rows of teeth.
Fig. 3 is a view of a half of the connection clamp of Fig. 1, as viewed with a cut along the symmetry plane of the connection clamp.
Fig. 4 is a perspective exploded view of the parts of a fluid connection assembly, using a connection clamp similar or identical as the one illustrated in Fig. 1, the clamp being here illustrated in spread configuration.
Fig. 5 is a perspective view of a connection clamp according to a second embodiment, in expanded state, with only one bridging portion extending along a front-rear direction and joined to the inner jaws by two parallel radial spacers.
Fig. 6A is a section view of a fluid connection assembly provided with the clamp of Fig. 5, before closure over a joint where an annular radial bulge is formed.
Fig. 6B shows the assembly of Fig. 6A with same section view, reflecting the two spaced clamping areas once the connection clamp has been closed over the joint.
FIG. 7 illustrates, in a perspective view, passage of a barb connector (protruding inside a tube end) through a connection clamp according to a third embodiment, before closure over the joint.
FIG. 8 illustrates , in a perspective view, a closed configuration of a connection clamp that is similar to connection clamp of Figs 6A-6B, with the first and second tongue members pushable by respective pressing surfaces that are mutually spaced and arranged rearward the tongue members along an insertion direction for inserting these members in the corresponding jaws.

### MORE DETAILED DESCRIPTION

A detailed description of several embodiments of the invention is provided below, accompanied with examples and with reference to the drawings.

In the various figures, the same references are used to designate identical or similar elements. Thickness size is to be understood in a usual way for the skilled person (thickness can be measured in a longitudinal plane/longitudinal cut view of the clamping device), while width reflects transverse size (along a right-left direction) measured perpendicular to such longitudinal plane.

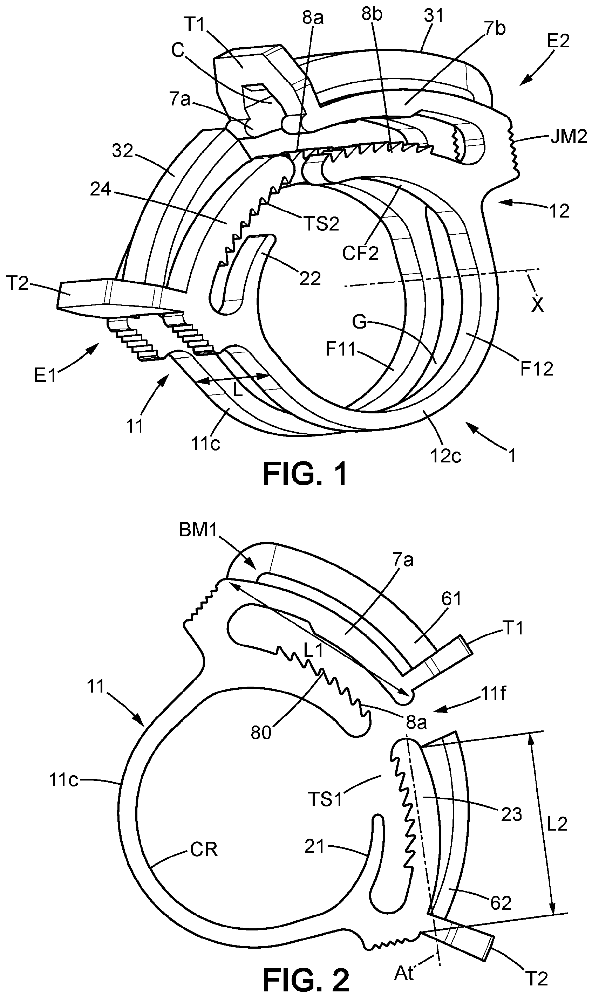

Referring to Figs 1, 5 and 7, it is shown exemplary constructions of a connection clamp 1, 101, 101', here made of a single piece of plastic material. The connection clamp 1, 101; 101', may comprise two clamping elements 11, 12 provided each with a ring part 11c, 12c. The two clamping elements 11, 12 are arranged with an interspace so that a gap G separates two ring parts 11c and 12c intended to be in direct contact with a flexible hose or tube T. The first clamping element 11 and the second clamping element 12 have an annular structure, each extending around a shared longitudinal axis X.
The connection clamp 1, 101, 101' may be integrally molded from plastic material into a single part. It is designed to be snap-fitted about the flexible tube T for securing connection of a flexible tube end to a barb fitting.

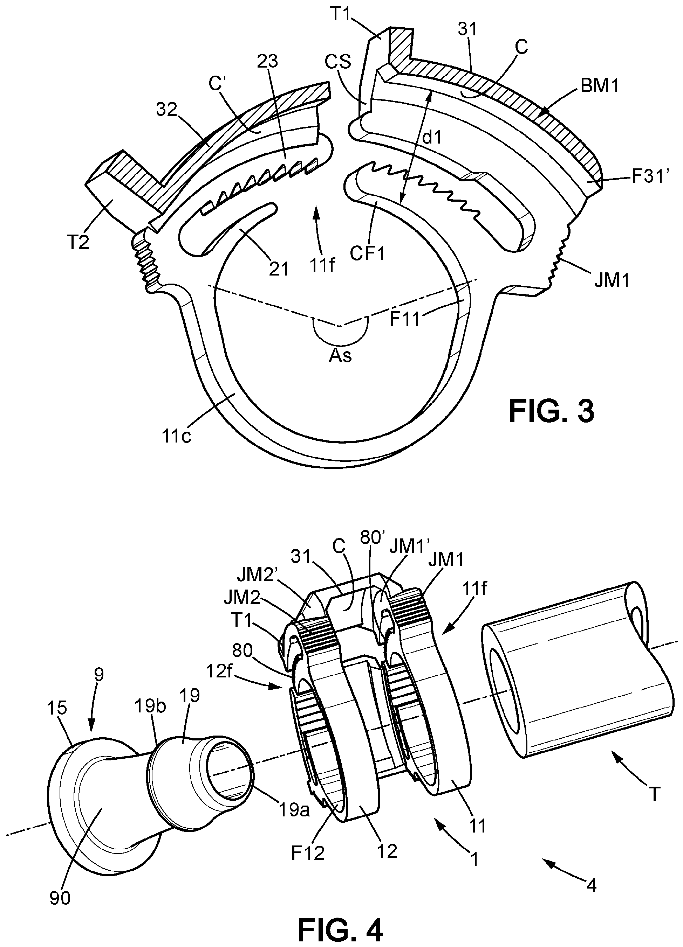

As illustrated in Fig. 4, the longitudinal axis X may define a rear-front direction or an insertion direction for the tube T, typically for the tube already connected on a barb connector or similar connector 9. The flexible tube T with a joint formed around a barb 19 of the connector 9 thus can be inserted through the passage (common passage) delimited by the first clamping element 11 and the second clamping element 12. These clamping elements can form a pair of annular clamping areas that are spaced. The longitudinal spacing of the clamping areas can be maintained substantially constant thanks to a rigidifying and connecting member BM1, BM1' that interconnects the two clamping elements 11, 12 at a common connection clamp end E2 that is at the opposite from the other connection clamp end E1.
While Figs 1 and 4 show also a rigidifying and connecting member at the connection clamp end E1, only the connection clamp end E2 may be provided with such rigidifying and connecting member configured to maintain the spacing, typically to have a constant gap G between clamping elements 11, 12.

In the connection clamp 1, 101, 101' having the two ring parts 11c, 12c arranged parallel, a bridging portion is interconnecting jaw parts of the interlocking elements 11f, 12f that are formed as extensions from the ring parts 11c, 12c. The connection clamp ends E1, E2, which include the interlocking elements 11f, 12f, are joined to opposite ends of the two ring parts 11c, 12c. Typically the junctions with the connection clamp ends E1, E2 involve at least one shoulder area, where an increase in thickness (radial size) is provided due to a shoulder arrangement.

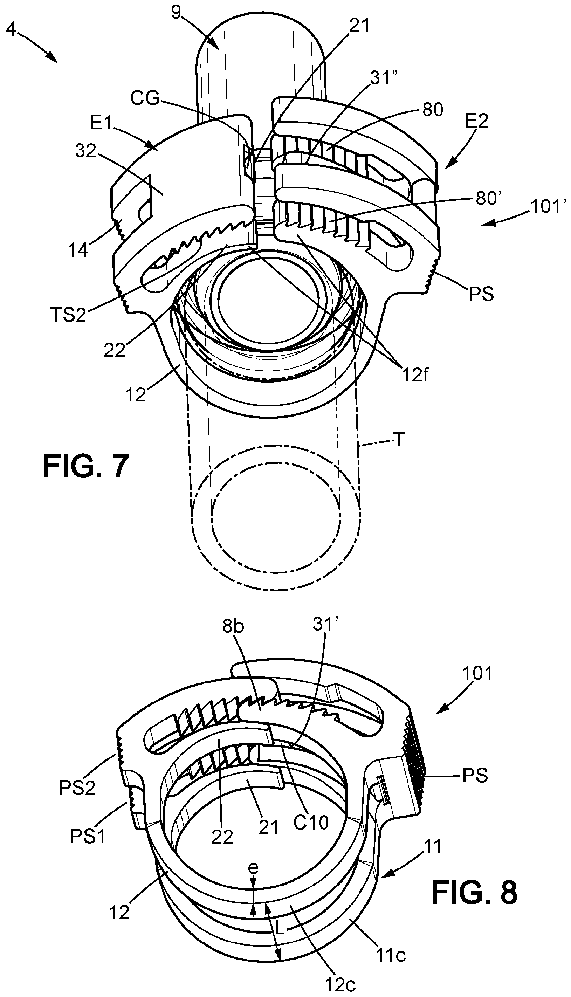

Referring to Figs 1-2, it can be seen that a first ring part 11c (in the first clamping element 11) and a second ring part 12c (in the second clamping element 12) keep their C-shape but form resilient plastic annular parts of the connection clamp 1. Each ring part 11c, 12c comprises or is a generally circular central portion of the corresponding clamping element 11, 12. Typically, as illustrated in Figs 1, 4-5 and 7-8, each of the first ring part 11c and the second ring part 12c terminates in opposite, integral shoulders forming its opposite ends. The shoulders can form external pressing surfaces of the connection clamp. Fig. 8 illustrates an option where two shoulders are mutually spaced in a connection clamp end, thus defining two distinct pressing surfaces PS1, PS2, while a common shoulder portion, forming another pressing surface PS, is provided at the opposite. This common shoulder portion is here included in a rigidifying and connecting member that includes a bridging portion, as described in more detail below. More generally, it is understood one or two shoulder parts can be formed to allow forming the interlocking element 11f, 12f that can mutually engage away from the respective inner circumferences CR of the ring parts 11c, 12c. Two first interlocking elements 11f can be provided at the respective ends of the first ring part 11c, while two second interlocking elements 12f can be provided at the respective ends of the second ring part 12c.

Now referring to non-limiting example of Figs 1-2 and 8, the shoulders or shoulder part on a first connection clamp end E1 can support two tongue members 23, 24 and optionally two extensions 21, 22 that are formed as extensions of the ring parts 11c, 12c, respectively. Jaw members may be formed. Indeed:
- a jaw coupler comprised of two jaw members is obtained with the extension 21 connected to the first tongue member 23 via the shoulder forming the first pressing surface PS1 (Fig. 8); and
- another jaw coupler comprised of two jaw members is obtained with the extension 22 connected to the second tongue member 24 via the shoulder forming the second pressing surface PS2.

These jaw members 21, 22, 23, 24 are integral with the shoulder(s). It is understood each of the jaw couplers provided with the tongue members 23, 24 projects integrally outwardly from a corresponding shoulder or shoulder part, toward the second connection clamp end E2. Of course, extensions 21, 22 could be of reduced length or can be suppressed in some options. Possibly, shoulders JM1, JM2 or a similar shoulder part can only be provided at the second connection clamp end E2, for instance with variants using tongue member(s) that are substantially constructed as a progressive extension projecting from the ring part end. Figs 1, 2, 3 and 8 show that extensions 21, 22 can have adapted length, possibly reduced as compared to length L2 of the first and second tongue members 23, 24 as measured along a tongue member direction At. More generally, the first tongue member 23 and the second tongue member 24 can form part of interlocking elements 11f, 12f.

As non-limitingly reflected by Figs 1-4, 6B and 7, the connection clamp 1, 101, 101' can be a double ring clamp having:
- two first interlocking elements 11f at the respective ends of the first ring part 11c,
- two second interlocking elements 12f at the respective ends of the second ring part 12c.
The first clamping element 11 is forming a first ring of adjustable inner circumference in a closed configuration of the first clamping element 11, and similarly or identically, the second clamping element 12 is forming a first ring of adjustable inner circumference in a closed configuration of the first clamping element 12.

The first tongue member 23 can form all or part of one of the first interlocking members 11f, while the other of the first interlocking members 11f can comprise or consist of a pair of jaws 7a, 8a. The second tongue member 24 can form all or part of one of the second interlocking members 12f, while the other of the second interlocking members 12f can comprise or consist of another pair of jaws 7b, 8b.
The two pair of jaws 7a, 8a, and 7b, 8b are well apparent in Fig. 1.
For each amongst the first interlocking members 11f and the second interlocking members 12f, the jaws may be snap-fitted to one another to lock the clamping element 11 or 12 in position. It will be appreciated that as locking occurs, the generally circular interior hollow of the connection clamp will be penetrated by the end of the flexible tube T (where the barb connector end is inserted), this flexible tube end being restrained by the connection clamp 1, 101, 101' at two spaced clamping areas.

Referring to Figs 4, 6A-6B and 7, it can be seen the connection clamp 1, 101, 101' can form a barb clamp of non-metal material for connecting the flexible tube T to the barb fitting that defines the barb connector 9. As illustrated in Fig. 4, the barb connector 9 may have a barb 19, possibly with a tapering surface formed toward a free annular end 19a of the barb connector 9. More generally, any annular bulge or relief can be provided on the fitting to form the connector to be inserted through the tube end to be covered by the connection clamp. Preferably, the barb connector or similar fitting has a first end attachable to or included to a biopharmaceutical fluid containing device and a second end insertable into the flexible tube T. A shoulder or flange 15 may be provided to stop insertion of the inserting part of the connector through the flexible tube T. The second end has a barb 19 or relief (possibly more than one barb or similar relief). Beyond the barb 19, possibly between the barb 19 and the flange 15, an annular portion can be provided with an external diameter that is lower than the maximum external diameter of the inserting portion, provided at the barb 19, typically substantially equal/ as low as an outer diameter formed at the annular freed end 19a.

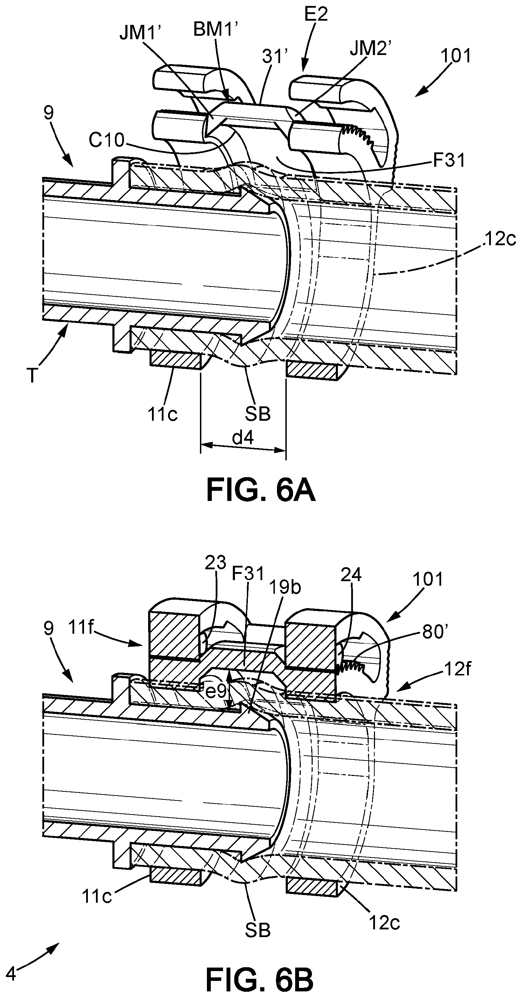

Due to the parallel arrangement of the first clamping element 11 and the second clamping element 12, the engageable parts of the barb clamp can be engaged over the second end of the barb fitting and the tube T, with the first clamping element 11 and the second clamping element 12 being adapted to be arranged on both sides of the barb 19, as reflected for instance in Figs 6A-6b and 7.
The parallel arrangement of the clamping elements 11, 12 can be maintained by at least one rigid bridging portion 31, 31', 31", 32 that is provided at and/or beyond junction of the ring parts 11c, 12c with the shoulders (i.e. away from the ring parts). Referring to Fig. 1, 5 and 6A, a first bridging portion 31, 31', 31", interposed between the first clamping element 11 and the second clamping element 12, is provided to fixedly connect the first pair of jaws 7a, 7b that can be radially spaced, to the second pair of jaws 8a, 8b (also radially spaced).

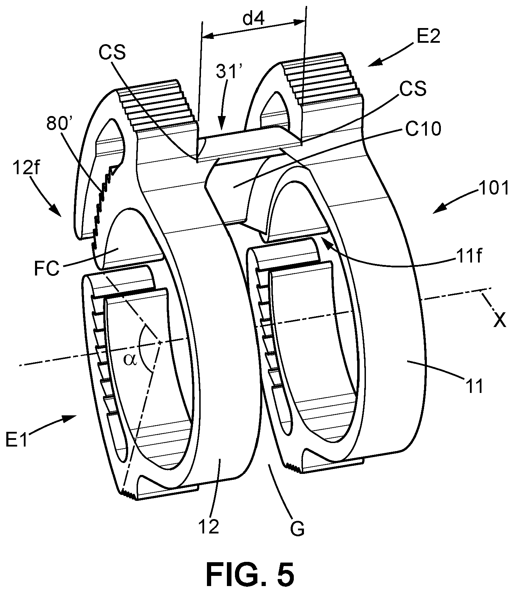

In illustrated embodiments, the first bridging portion 31, 31', 31" is provided at the second connection clamp end E2, where one or two shoulder(s) JM1, JM2 are formed to shift the upper jaws 7a, 7b, radially outward with respect to the lower jaws 8a, 8b (radially inner jaws). The first bridging portion 31, 31',31" maintains a predetermined spacing d4 (see Fig. 5) between the first pair of jaws 7a, 8a and the second pair of jaws 7b, 8b.

The adjustable inner circumference for each clamping element 11, 12 can have same and simultaneous adjustment, due to bridging portions 31, 31" and 32 that are not allowing any difference in the clamping action between adjustment in circumferential length of the contact face of the first clamping element 11 and adjustment in circumferential length of the contact face of the second clamping element 12. The inner face F11 and inner face F12 respectively provided by the ring parts 11c, 12c can be identical in length and in width (face width as measured along direction of longitudinal axis X), while the contact faces FC1 and FC2 in the inner jaws 8a, 8b may be identically covered (partly or entirely covered) by a corresponding one of the extensions 21, 22, in closed configuration.

### Distribution of teeth in the first interlocking elements and in the second interlocking elements, to maintain closed configuration

The first pair of jaws 7a, 8a can define/delimit a first space therebetween and are provided with a first set of teeth 80. The second pair of jaws 7b, 8b can also define/delimit a second space therebetween, with a second set of teeth 80' provided. As best shown in Figs 1-2, radially inner jaw 8a is spaced-apart from the upper element/jaw 7a with a generally arcuate slot defined therebetween, forming the first space. Both jaws 7a and 8a project away from the shoulder JM1 and are integral therewith.
The connection clamp 1 can be symmetrical (idem for the connection clamp 101, 101'). Whatever the precise structure of the connection clamp, radially inner jaw 8b may also be spaced-apart from the upper element/jaw 8a with a generally arcuate slot defined therebetween, forming the second space. Both jaws 7b and 8b project away from the shoulder JM2 and are integral therewith.

Since the first tongue member 23 and the second tongue member 24 have teeth, typically with a first complementary set of teeth TS1 formed on the first tongue member 23 and a second complementary set of teeth TS2 formed on the second tongue member 24, a retaining effect to maintain closed configuration of the connection clamp 1, 101, 101' can be obtained, knowing that the interlocking elements 11f, 12f allow:
- the first tongue member 23 to be engaged and an inserted (to reach an inserted configuration) inside the first space, in closed configuration of the first clamping element 11;
- the second tongue member 24 to be engaged and has an inserted (to also reach an inserted configuration) inside the second space, in closed configuration of the second clamping element 12.

The teeth in the tongue members 23, 24 may all have same general orientation, for instance protruding radially outward or protruding radially inward. In some embodiments, as illustrated in the two first interlocking elements 11f and in the two second interlocking elements 12f, the radially-inner jaw 8a, 8b has a radially-outer face provided with a set of teeth 80, 80' that cooperates, in a closed configuration of the connection clamp, with inwardly orientated teeth of the respective complementary set of teeth TS1, TS2.

Of course, the teeth in the inner jaws 8a, 8b are not interfering with proper insertion of the tongue members 23, 24, typically due to bevelled design at the front/engagement side of the teeth. Progressive rotation, around the longitudinal axis X, of the tongue members 23, 24 (with same rotation direction) is obtained when performing the closure of the clamping elements 11, 12. This rotation can be allowed due to the elasticity of the ring parts 11c, 12c. A radius of curvature that is lower than in the initial/spread state can be obtained for the ring parts 11, 12.

The slots forming the first space and the second space may open on two sides: front side and rear side along the longitudinal axis X. Each of the two recesses/slots thus opens in two opposite directions along the longitudinal axis X.
As illustrated in Figs 6B, and 8 the first bridging portion 31', 31" may have a raised portion, preferably an arcuate portion, that extends, longitudinally, between the two spaces (slots/recesses) where the first tongue member 23 and the second tongue member 24 are respectively received, in closed configuration of the connection clamp 101, 101'. With such disposition, the first space and the second space can be separated from a distance that is kept unchanged, especially when the first bridging portion 31', 31" directly connects the inner jaws that delimit an inner side of these spaces/slots.

As shown for instance in Fig. 6B, the first bridging portion 31, 31', 31" has a radially inner face F31 delimiting a gap section of the annular gap that is formed between the ring parts 11c, 12c, so that the circumferential radial bulge SB can be entirely housed in this annular gap, even underneath the bridging portion(s) forming the middle section of the connection clamp 1, 101, 101' in the closed configuration. The fluid connection assembly 4 may include the connection clamp 1, 101, 101' arranged around the barb connector 9 and placed in a position that is slightly shifted longitudinally with respect to the flange 15, which is a flange against which the flexible tube end can axially abut.

The inner face F31 may be provided at a minimal radial distance, superior to average thickness e of the ring parts 11c, 12c, from the inner face delimiting the inner circumference CR of the clamp. This minimal radial distance can be superior or equal to 3 mm for instance, such distance being possibly measured substantially in a symmetry plane of the connection clamp, which is a virtual plane intersecting the first bridging portion 31, 31', 31" (it may be a median plane of the middle section, perpendicular to the longitudinal axis X), provided at equal distance from the clamping elements 11 and 12.
It can generally be seen that the clamping elements 11, 12 may respectively have a constant width forming the longitudinal extension, possibly same constant width, as measured parallel to the longitudinal axis X.

The radial distance between the radially inner face F31 and the barb 19 (at the barb edge 19d) can be greater or equal to twice an average thickness e (Fig. 8) of the first and second ring parts 11c, 12c. To have such radial distance, when having the first bridging portion 31, 31',31" connected to the inner jaws 8a, 8b, a concave profile may be provided to have an elongated hollow underneath the first bridging portion 31, 31', 31", this elongated hollow being parallel and possibly at same radial position or farther as compared to radial position of the elongated slots forming the first space and the second space, in the pair of jaws 7a, 8a and 7b, 8b.

Along the longitudinal axis X, a central passage is formed for a flexible tube T (with several possibilities for the outer diameter of the flexible tube T), with all the teeth of interlocking elements provided away (radially offset) from the central passage.
The connection clamp 1, 101, 101' can allow different sizes for inner circumference CR to be obtained as a function of the number of teeth mutually inter-engaged in closed configuration. The middle section of the clamp, formed in the closed configuration in angular sector that includes several teeth, possibly all the teeth, has a given extension, along the longitudinal axis X. This given extension may be about one third or more of the full extension L of the clamp 1, 101, 101' (see Figs 1 and 8). More generally, this middle section extension (along axis X) may correspond to less than 60 or 65% of the clamp full extension and more than 30% of the clamp full extension. Figs 1, 4-7 show that the middle section, consisting of one or two rigid members forming the bridging portions, may create a gap G that may be superior to about 9 or 10 mm.

Maximal overall extension of the connection clamp 1, 101, 101' (which can be the given extension, typically constant, of this clamp) may remain inferior or equal to 45 mm, preferably inferior or equal to 36 mm, as measured along the longitudinal axis X. The gap G, typically corresponding to extension of the middle section, can be superior or equal to the extension (also measured along the longitudinal axis X, corresponding to the clamping element width) of the first clamping element 11 or the extension/width of the second clamping element 12.

### Exemplary structure of bridging portion(s)

Use of one or more bridging portions, in at least one of the two connection clamp ends E1, E2, allows synchronizing movement of two parallel interlocking elements that belong to same connection clamp end, while also allowing maintaining the predetermined spacing d4. The closed configuration can be either obtained by a single gesture, when the tongue members 23, 24 are integral parts of the connection clamp end E1, or possibly obtained sequentially with a first closure of the first clamping element 11 and a second, independent, closure of the second clamping element 12 when the tongue members 23, 24 can be pushed or actuated separately (at the respective pressing surfaces PS1, PS2 for instance).

The bridging portion(s) can optionally be provided away from the underside faces, which are forming the inner circumference portion of the inner circumference CR, at location of the interlocking elements 11f, 12f. As illustrated in Figs 7-8 for closed configuration of the connection clamp 101, 101', no filling of the circular annular gap is allowed due to such bridging portion(s): the underside faces at the interlocking elements 11f, 12f are continuously interspaced: Besides, a pair of generally continuous undersides, each forming contact clamping surfaces substantially smooth and circular, can be obtained for the clamping elements 11, 12.

In illustrated embodiments, the first bridging portion 31, 31', 31" is arranged:
- either radially beyond the shoulders JM1, JM2 (or beyond a similar shoulder part, possibly a common shoulder part joining/linking the two clamping elements 11, 12 in the second connection clamp end E2), with two connection sides CS of this portion 31 formed on the upper jaws 7a, 7b, which is for instance the case in the connection clamp 1 according to a first embodiment as illustrated in Figs 1 and 3-4;
- or beyond the shoulders JM1, JM2 (or beyond a similar shoulder part, possibly a common shoulder part), with two connection sides CS of this portion 31', 31" formed on the lower jaws 8a, 8b, which is for instance the case in the connection clamp 101 or 101', according to a second or third embodiment as illustrated in Figs 5-8.

In any of these cases, the first bridging portion 31, 31', 31" is radially shifted outward, relative to the ring parts 11c, 12c, and extends at least as far radially from the flexible tube T, in assembled state, as a teeth engagement area of the first and second interlocking elements 11f, 12f. The first bridging portion 31; 31'; 31" may include or be a flat arcuate portion raised relative to the two connection sides CS.
More generally, the connection clamp 1, 101, 101' may be provided with radial spacing members that can shift the flat arcuate portion away from the clamping areas and away from the inner jaws 8a, 8b. The shoulders JM1, JM2 can be considered a first option to form these radial spacing members. In some embodiments, the radial spacing members JM1', JM2' may include or be members that directly form the connection sides CS.

In option of Figs 3-4, the first bridging portion 31 can cumulatively be shifted, radially outward relative to the inner jaws 8a, 8b, by: the shoulders JM1, JM2 and the additional radial spacers JM1', JM2' that delimits a cavity or groove C underneath the arcuate portion that allows the bridging to obtain the first bridging portion 31. The radial distance d1 between the contact face CF1 or CF2, for pressing contact with the flexible tube T, and the inner face F31 of the first bridging portion 31, may be superior or equal to 4 or 5 mm and/or may be higher than radial extension of the shoulders JM1, JM2.

In option of Figs 6A-6B, the first bridging portion 31' can have side radial spacers JM1', JM2', allowing the inner face F31 of the first bridging portion 31', which is facing the joint area where an annular swelling bulge or similar annular radial bulge is formed SB, to be radially spaced of several millimeters relative to the final clamp inner diameter obtained at the inner jaws 8a, 8b. A cavity or groove CG (Fig. 6A) is also formed, allowing increasing the radial distance e9 (Fig. 6B) between the inner face F31 and an external face of the barb connector that is provided adjacent to the barb edge 19b.
It is understood that the radial distance between the contact face CF1 or CF2, for pressing contact with the flexible tube T, and the inner face F31 of the first bridging portion 31', may be superior or equal to thickness of the flexible tube T, for instance superior or equal 2 or 3 mm.

The connection clamp 1, 101, 101' thus can have a middle section, interposed between the clamping elements 11, 12, that clears (is not interfering with) the barb-induced bulge, i.e. the annular radial bulge SB on the hose/tube T, in assembled and clamped state of the connection clamp. When the first bridging portion 31' is selectively connected to the two inner jaws 8a, 8b in the second connection clamp end E2, no part of the connection clamp is engaged underneath the first bridging portion 31' in closed configuration.
When the clamping elements 11, 12 are provided with extensions 21, 22, each extension 21, 22 can possibly slide below/radially underneath the corresponding inner jaw 8a, 8b, to be radially pushed inward by the corresponding inner jaw 8a or 8b, as illustrated in Fig. 8 for instance. A curved contact face FC (Fig. 5) may be provided at this extension 21, 22 that follows curvature of the whole inner circumference CR of the corresponding clamping element 11 or 12. Each tongue member 23, 24 may be sufficiently elongated, possibly as elongated as the slots forming the first and second spaces, so that a significant angular sector of angle α is covered by the tongue members 23, 24. For instance, each tongue member 23, 24 extends over an angular sector with sector characteristic/angle α (relative to the longitudinal axis X) that is superior to 30 or 35°, possibly without exceeding 80 or 85°, as reflected in Fig. 5. This can mean that the pair of jaws 7a, 8a, and 7b, 8b can also have such kind of elongation, to cover an angular sector superior to 30 or 35°, possibly without exceeding 80 or 85°.

In these embodiments, the tooth sections TS1, TS2 of the tongue members 23, 24 are provided with inwardly orientated teeth, which can correspond to a robust engagement with the pairs of jaws, where the sets of teeth 80, 80' provided outwardly orientated teeth. Cooperation in closed configuration, by the teeth engagements, prevents a reverse motion of the tongue members 23, 24 relative to the first and second spaces (elongated slots), respectively.

Whatever the structure of the interlocking elements, angular sector As (Fig. 3) of the ring parts 11c, 12c, which is complementary to angular sector of the interlocking element 11f, 12f, may be superior or equal to 220°, for instance superior or equal to 240°, in open, spread configuration of the connection clamp 1, 101, 101'. This angular sector As is measured between the junction/proximal end of shoulders JM1, JM2 (junction with the second connection clamp end E2) and the other junction, which is the junction with first connection clamp E1. Angular sector of the interlocking elements 11f, 12f, thus may be inferior to 140°, for instance inferior or equal to 120° in this spread configuration, as illustrated in Fig.1 or 7 for example.

### Example of integration of a second bridging portion

The interlocking elements may be provided with two bridging portions distributed in the opposite connection clamp ends. The clamp, in closed configuration, can have a middle section interposed between the first clamping element 11 and the second clamping element 12, which is a section where the first bridging portion 31, 31", provided in the connection clamp end E2, overlaps or is overlapped by a second bridging portion 32 provided in the other connection clamp end E1.
Whatever the way the inner face of the middle section is formed in a bridging portion, this inner face F31 is radially distant from the level of the inner jaws 8a, 8b, possibly with the middle section being shaped with a concave profile to have the inner face F31 delimiting the cavity or groove CG. The cavity design in the middle section, with an arch profile as in the option illustrated in Fig. 4 or 6B for instance, allows keeping an empty space for the radial annular bulge SB, thus keeping a continuous separation between the two parallel rings formed by the connection clamp 1, 101, 101'.

The second bridging portion 32 can have an outer face 62 that can be displaced underneath the first bridging portion 31, possibly using a tab T2 that is arranged rearwardly when considering the tongue member direction At (Fig. 2), at a closing step involving a pushing at this tab T2.
More generally, whatever the number of bridging portions, the middle section can be provided with at least one tab or grasping relief, protruding radially outward, to help the closing/improve ergonomics. One or two tabs T1, T2 can help grabbing and closing the double ring clamp, typically with a pair of fingers and/or with a tool. In some cases, the tool can control the spacing between the tabs and closing force to guarantee a proper pressure is reached.

A tab T1 can be provided in the second connection clamp end E2, with a tab position adjacent to a front opening/front open face of the connection clamp end E2 which faces the second bridging portion 32. The connection clamp end E1 provided with the tongue members 23, 24 can be pushed at the tab T2, with the other end E2 pushed in opposite direction at the tab T1
With or without use of tab(s) T1, T2, the second bridging portion 32 may have an arch profile as the first bridging portion 31, as reflected for instance in Fig. 1-3. A cavity or groove C' thus can also be delimited by a concave inner face of the second bridging portion 32.

Fig. 7 illustrates the spread configuration of the clamp 101' before the clamping around the joint, with the second bridging portion 32 connected to the tongue members 23, 24 (to be integrally displaceable with these tongue members) and delimiting an inner groove CG in the middle section. With such configuration the first bridging portion 31", integral with the inner jaws 8a, 8b, can be:
- guided by the inner groove CG, possibly to keep a suitable pressure effect in the second connection clamp end E2, with the inner jaws 8a, 8b radially pressing inward onto the extensions 21, 22,
- while also being guided between the first tongue member 23 and the second tongue member 24.
The middle section can be composed of two bridging portions or more, forming two distinct bridges that can overlap. At least the first bridging portion may be substantially as elongated as the slot forming the space (first space) between superimposed jaws 7a, 8a and 7b, 8b.

In some embodiment, the first bridging portion 31, 31', 31" can belong to a bridge member BM1; BM1', and has the inner face F31 shifted radially outward due to the radial spacers (JM1, JM2, JM1', JM2'). The radial spacers may extend each, respectively, between one of the two connection sides CS and the first bridging portion. The bridge member may be a part that constitutes a continuous bridge, with continuous junctions with the clamping elements (without any aperture for instance at such junctions/connection sides).

Referring to Fig. 2, each tongue member 23, 24 can be elongated, having a length L2 lower than length L1 of the parallel elongated slots (forming the first and second spaces). At least four, five or six teeth may be provided to form each tooth section 80, 80' in the connection clamp end E2.

Now referring to Fig. 7, the second bridge portion 32 may share a common top face with the tongue members 23, 24, while the bridge portion is of reduced thickness (lower radial size) as compared to the first tongue member 23 and the second tongue member 24. As a result, channel or inner groove CG is formed along the inner face F31 for guiding of the first bridging portion 31". This inner groove CG may correspond to a limited interspace extending between these tongue members 23, 24, substantially at same level as the teeth sections TS1, TS2. With such geometry at the closure step, the first bridging portion 31" is guiding the other connection clamp end E1 formed as a single block. The closure is obtained by a simple gesture, the first bridging portion 31" forming a rail that can engages inside the inner groove CG to be then interposed between the first tongue member 23 and the second tongue member 24.
A flat inserting member arranged to overlap the inner jaws 8a, 8b is forming a top member of the connection clamp end E1. This flat top member is obtained to have the tongue members delimiting thickness (radial size) of the top member in this non-limiting embodiment.

Now referring to Figs 5 and 8, it is illustrated options without any second bridging portion, to allow a two-step clamping, while the inner jaws 8a, 8b and the first bridging portion 31' can have a similar design as the flat inserting member of Fig. 7, but here arranged as a lower flat inserting member that is part of the other connection clamp end E2 and provided to overlap the extensions 21 and 22. It is understood the tongue members 23, 24 are here separately insertable in the first space and in the second space, respectively.
While this connection clamp 101 is here made as a single plastic component/piece, the connection clamp end E1 can be split into two subparts that can be handled independently. The pressing surface PS1, PS2 in the two shoulders are thus pushable sequentially if wanted.

Unlike the single-step closure that occurs with a fluid connection assembly 4 such a shown in Fig. 7 for instance, this connection clamp according to a second embodiment can have a first bridging portion 31' that is forming a central guiding rail, which is:
- insertable in the middle of the clamping connection end E1, between the two subparts thereof; and
- possibly firstly guiding one of the tongue members 23 or 24 that is inserted in the corresponding slot/space, before guiding the other tongue member 24 or 23.
Besides, deviation is prevented since the first space and the second space are not fully open due to the present of the first bridging portion 31'.

In the option illustrated in Fig. 1, the first space and the second space are each fully open, without guiding provided adjacent to these spaces/slots: the guiding effect, preventing deviation, is here obtained by engagement between the first bridging portion 31 and the second bridging portion 32.
More generally, the connection clamp ends E1, E2 can be movable simultaneously, each formed as a single block, possibly using tab(s) T1, T2 as in the first embodiment (Fig. 1) or any other outer actuation portion allowing these connection clamp ends E1, E2 to be pushable into one another in a tangential direction, thereby being latchable with one another.

Referring to Figs 4, 6A-6B and 7, parts of the fluid connection assembly 4 are illustrated. This assembly may simply comprise three pieces: the flexible tube T, the barb connector 9 and the connection clamp 1, 101, 101'. Since the annular radial bulge SB is apparent and the clamp can be provided with a symmetrical disposition of the clamping elements 11, 12, proper positioning of the connection clamp is very easy, while the two clamping areas can be obtained with limited displacement/stroke, thanks to the interlocking at the interlocking elements 11f,

In some options, the connection clamp 1, 101, 101' may be configured so that, once closed, it remains irreversibly closed. An "irreversibly" closed or closable flow control clamp can only be released from the closed and locked position by extraordinary and unintended manipulation of the clamp, including breakage of the clamp.

While embodiments are shown with a same common plastic piece to include each bridging portion 31, 31', 31" and/or 32 and the semi rigid ring parts 11c, 12c extended by the interlocking elements, other options are available. For instance, a clip fixation can be provided to obtain the rigid connection at such bridging portion, so that the connection clamp is constructed as an assembly of two pieces or possibly more than two pieces.
Whatever the way the connection clamp is produced, it may have a constant size/extension L along the longitudinal axis X.

Besides, it is understood that any suitable structure can be provided to form the respective pairs of jaws. While the drawings show embodiments where the jaws can be seen as having a lower jaw (radially-inner jaw 8a, 8b) provided with the set of teeth 80, 80' on the radially-outer face, variants may be provided with the jaws having the teeth formed on a radially-inner face used to delimit the space in these jaws.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

## Claims

1. A connection clamp (1; 101; 101') for tightly clamping a flexible tube connection, in particular tube connection using a barb connector (9), the connection clamp (1; 101; 101') comprising:
- a first clamping element (11), provided with a first ring part (11c), C-shaped, and two first interlocking elements (11f) at the respective ends of the first ring part (11c), the first clamping element (11) forming a first ring of adjustable inner circumference in a closed configuration of the first clamping element;
- a second clamping element (12) consisting of a second ring part (12c), C-shaped, and two second interlocking elements (12f) at the respective ends of the second ring part (12c), the second clamping element (12) forming a second ring of adjustable inner circumference in a closed configuration of the second clamping element;
- a first bridging portion (31; 31'; 31") interposed between the first clamping element (11) and the second clamping element (12);
wherein the first clamping element (11) and the second clamping element (12) have an annular structure, each extending around a shared longitudinal axis (X), to form a pair of annular clamping areas that are spaced;
wherein the two first interlocking elements (11f) comprise:
- a first pair of jaws (7a, 8a) radially-spaced to define a first space therebetween, including a first set of teeth (80);
- a first tongue member (23) having a first complementary set of teeth (TS1), the first tongue member (23) extending along a tongue member longitudinal direction (At); and
- a radial spacing at said first space so that the first tongue member (23) can engage and has an inserted configuration inside the first space, in the closed configuration of the first clamping element (11);
wherein the two second interlocking elements (12f) comprise:
- a second pair of jaws (7b, 8b) radially-spaced to define a second space therebetween, including a second set of teeth (80');
- a second tongue member (24) having a second complementary set of teeth (TS2), the second tongue member (24) extending parallel to the first tongue member (23); and
- a radial spacing at said second space so that the second tongue member (24) can engage and has an inserted configuration inside the second space, in the closed configuration of the second clamping element (12);
wherein the first bridging portion (31; 31'; 31") is a rigid portion;
**characterised in that** the first bridging portion (31; 31'; 31")
- fixedly connects the first pair of jaws (7a, 8a) to the second pair of jaws (7b, 8b), and
- maintains a predetermined spacing between the first pair of jaws (7a, 8a) and the second pair of jaws (7b, 8b).

2. The connection clamp according to claim 1, wherein the first bridging portion (31; 31'; 31") is arranged radially away from the first ring part (11c) and the second ring part (12c), to prevent any first bridging portion contact on the flexible tube of the flexible connection.

3. The connection clamp according to claim 1 or 2, wherein the first bridging portion (31;31'; 31") has two connection sides (CS) for connection with the first pair of jaws (7a, 8a) and the second pair of jaws (7b, 8b), respectively,
and wherein the first bridging portion (31; 31'; 31") includes a flat arcuate portion that is part of a bridge member (BM1; BM1') raised relative to the two connection sides, due to two radial spacing members (JM1, JM2; JM1', JM2') that extend each, respectively, between one of the two connection sides and the first bridging portion (31; 31'; 31").

4. The connection clamp according to any of the preceding claims, wherein the first bridging portion (31; 31'; 31") has a radially-inner face (F31) that has a concave curvature or concave profile as viewed in a cross-section parallel to direction of the shared longitudinal axis (X).

5. The connection clamp according to any one of the preceding claims, further comprising a second bridging portion (32) that:
- fixedly connects the first tongue member (23) to the second tongue member (24), and
- maintains a predetermined spacing between the first tongue member (23) to the second tongue member (24).

6. The connection clamp according to claim 5, wherein the first bridging portion (31) is provided with a first radial tab (T1), the second bridging portion (32) being provided with a second radial tab (T2), so that:
- a first connection clamp end (E1), provided with the first tongue member (23) and the second tongue member (24), on the one hand, and
- a second connection clamp end (E2), provided with the first and second pairs of jaws (7a, 8a, 7b, 8b), on the other hand,
are movable simultaneously using the first and second radial tabs (T1, T2) and pushable into one another in a tangential direction, thereby being latchable with one another.

7. The connection clamp according to claim 5 or 6, wherein the second bridging portion (32) delimits an inner groove (CG) or a rail guiding the first bridging portion (31; 31"), the second bridging portion (32) and the first bridging portion (31; 31") being in an overlapping configuration in the closed configuration, preferably with the second bridge (32) being inserted between the first pair of jaws (7a, 8a) and the second pair of jaws (7b, 8b).

8. The connection clamp according to any one of the preceding claims, wherein the connection clamp (1; 101; 101') has an initial expanded configuration, in which the first tongue member (23) is spaced, along a tangential direction, from the first pair of jaws (7a, 8a) by a first predefined spacing distance, while the second tongue member (24) is spaced, along the tangential direction, from the second pair of jaws (7b, 8b) by a second predefined spacing distance,
wherein the first predefined distance and the second predefined distance are equal and are inferior to a constant spacing distance (d4), measured along direction of the longitudinal axis (X), delimited between the first ring part (11c) and the second ring part (12c), the tangential direction being perpendicular to the longitudinal axis (X).

9. The connection clamp according to any one of the preceding claims, wherein the first tongue member (23) and the second tongue member (24) are part of another pair of jaws, provided in a connection clamp end (E1) that is at the opposite from a connection clamp end (E2) provided with the first bridging portion (31).

10. The connection clamp according to claim 9 when depending on claim 5, wherein the first tongue member (23) and the second tongue member (24) are radially outer jaws in said other pair of jaws,
and wherein the second bridging portion (32) is arcuated to be inserted into a channel or grove (C) delimited by the first bridging portion (31).

11. The connection clamp according to any one of the preceding claims, wherein for the two first interlocking elements (11f) and for the two second interlocking elements (12f) as well:
- each pair of jaws includes a radially-inner jaw (8a; 8b) having a radially-outer face provided with one of the first and second sets of teeth (80; 80') that cooperates, in a closed configuration of the connection clamp (1; 101; 101'), with inwardly orientated teeth that are part of one of the first complementary set of teeth (TS1) and the second complementary set of teeth (TS2), respectively,
the inwardly orientated teeth (TS1, TS2) being distributed on two radially-inner faces that are:
- a radially-inner face of the first tongue member (23); and
- a radially-inner face of the second tongue member (24).

12. The connection clamp according to any one of the preceding claims, wherein each of the first clamping element (11) and the second clamping element (12) is deformable between a spread configuration and an adjustable retracted configuration, the two first interlocking elements (11f) and the two second interlocking elements (12f) being configured to maintain the retracted configuration, respectively of the first clamping element (11) and the second clamping element (12),
wherein the connection clamp may has two opposite connection clamp ends (E1, E2) and includes two annular retaining surfaces, parallel, for contacting and maintaining the flexible tube over a barb of the connector,
and wherein the first bridging portion (31; 31'; 31") is:
- integrally constructed with one clamp end (E2) of the two connection clamp ends (E1, E2);
- radially spaced outward relative to the two annular retaining surfaces, so that the first bridging portion (31; 31'; 31") is either guiding the other connection clamp end (E1) formed as a single block that includes the first tongue member (23) and the second tongue member (24), or is forming a rail interposed between and guiding the first tongue member (23) and the second tongue member (24) that are separately insertable in the first space and in the second space, respectively.

13. The connection clamp according to any one of the preceding claims, forming a barb clamp of non-metal material for connecting the flexible tube (T) to a barb fitting that defines the barb connector (9) and has a first end attachable to or included to a biopharmaceutical fluid containing device and a second end insertable into the flexible tube, the second end having a barb (19), the first clamping element (11) and the second clamping element (12) being parts of the barb clamp that are engageable over the second end of the barb fitting and the tube, with the first clamping element (11) and the second clamping element (12) being adapted to be arranged on both sides of the barb (19);
wherein the first bridging portion (31; 31'; 31"), the first clamping element (11) and the second clamping element (12) belong to a single piece made of plastic material.

14. A fluid connection assembly (4), comprising:
- a barbed connector (9) having a barb (19);
- a flexible tube (T) having a connecting end into which the barbed connector (9) protrudes, so that a circumferential radial bulge (SB) is formed due to compression of the flexible tube (T) by the barb (19); and
- the connection clamp (1; 101; 101') according to any of the preceding claims around the flexible tube (T) and the barbed connector (9), to maintain the flexible tube against the barbed connector (9);
wherein the circumferential radial bulge (SB) is housed in an annular gap provided between the first clamping element (11) and the second clamping element (12), the first bridging portion (31; 31'; 31") being radially shifted outward relative to ring parts (11c, 12c), in order to not contact and interfere with the circumferential radial bulge (SB), the first bridging portion (31; 31'; 31") entirely extending radially away from the flexible tube.

15. The fluid connection assembly according to claim 14, wherein the first bridging portion (31; 31'; 31") is radially shifted outward, relative to the ring parts (11c, 12c), to extend at least as far radially from the flexible tube (T) as a teeth engagement area of the first and second interlocking elements (11f, 12f).

16. A method for connecting a flexible tube (T) to a connector (9) that is barbed, the method comprising:
- providing the connector (9) protruding into an end of the flexible tube (T), whereby a circumferential radial bulge (SB) is formed due to compression of the flexible tube (T) by a barb (19) of the connector (9);
- providing a connection clamp (1; 101; 101') according to any of the claims 1-13 around the flexible tube (T) and the barbed connector, the first interlocking elements (11f) and the second interlocking elements (12f) of the connection clamp being connected and locked to each other after positioning the first clamping element (11) and the second clamping (12) element respectively on both sides relative to the circumferential radial bulge (SB);
wherein the flexible tube (T) is clamped by the connection clamp (1, 101; 101') selectively at two annular clamping areas that are spaced apart by a given distance along the longitudinal axis (X), due to two respective annular contacts of the first clamping element (11) and the second clamping element (12) onto the flexible tube (T).

## Patentansprüche

1. Verbindungsschelle (1; 101; 101') zum dichten Festklemmen einer Verbindung eines flexiblen Schlauchs, insbesondere einer Schlauchverbindung unter Verwendung eines Widerhakenverbinders (9), wobei die Verbindungsschelle (1; 101; 101') umfasst:
- ein erstes Klemmelement (11), das mit einem ersten, C-förmigen Ringteil (11c) und zwei ersten Verriegelungselementen (11f) an den jeweiligen Enden des ersten Ringteils (11c) versehen ist, wobei das erste Klemmelement in einer geschlossenen Konfiguration des ersten Klemmelements einen ersten Ring mit einstellbarem Innenumfang bildet;
- ein zweites Klemmelement (12), bestehend aus einem zweiten, C-förmigen Ringteil (12c) und zwei zweiten Verriegelungselementen (12f) an den jeweiligen Enden des zweiten Ringteils (12c), wobei das zweite Klemmelement in einer geschlossenen Konfiguration des zweiten Klemmelements einen zweiten Ring mit einstellbarem Innenumfang bildet;
- einen ersten Brückenabschnitt (31; 31'; 31"), der zwischen dem ersten Klemmelement (11) und dem zweiten Klemmelement (12) angeordnet ist;
wobei das erste Klemmelement (11) und das zweite Klemmelement (12) eine ringförmige Struktur aufweisen, die sich jeweils um eine gemeinsame Längsachse (X) erstreckt, um ein Paar beabstandeter ringförmiger Klemmbereiche zu bilden;
wobei die zwei ersten Verriegelungselemente (11f) umfassen:
- ein erstes Paar von Backen (7a, 8a), die radial beabstandet sind, um einen ersten Zwischenraum zwischen ihnen zu definieren, einschließlich eines ersten Zahnsatzes (80);
- ein erstes zungenartiges Element (23) mit einem ersten komplementären Zahnsatz (TS1), wobei sich das erste zungenartige Element (23) entlang einer Längsrichtung des zungenartigen Elements (At) erstreckt; und
- eine radiale Beabstandung an dem genannten ersten Zwischenraum, so dass das erste zungenartige Element (23) eingreifen kann und in der geschlossenen Konfiguration des ersten Klemmelements (11) eine eingesetzte Konfiguration innerhalb des ersten Zwischenraums aufweist;
wobei die zwei zweiten Verriegelungselemente (12f) umfassen:
- ein zweites Paar von Backen (7b, 8b), die radial beabstandet sind, um einen zweiten Zwischenraum zwischen ihnen zu definieren, einschließlich eines zweiten Zahnsatzes (80');
- ein zweites zungenartiges Element (24) mit einem zweiten komplementären Zahnsatz (TS2), wobei sich das zweite zungenartige Element (24) parallel zum ersten zungenartigen Element (23) erstreckt; und
- eine radiale Beabstandung an dem genannten zweiten Zwischenraum, so dass das zweite zungenartige Element (24) eingreifen kann und in der geschlossenen Konfiguration des zweiten Klemmelements (12) eine eingesetzte Konfiguration innerhalb des zweiten Zwischenraums aufweist;
wobei der erste Brückenabschnitt (31; 31'; 31") ein starrer Abschnitt ist;
**dadurch gekennzeichnet, dass** der erste Brückenabschnitt (31; 31'; 31")
- das erste Paar von Backen (7a, 8a) fest mit dem zweiten Paar von Backen (7b, 8b) verbindet, und
- einen vorbestimmten Abstand zwischen dem ersten Paar von Backen (7a, 8a) und dem zweiten Paar von Backen (7b, 8b) aufrechterhält.

2. Verbindungsschelle nach Anspruch 1, wobei der erste Brückenabschnitt (31; 31'; 31") radial entfernt von dem ersten Ringteil (11c) und dem zweiten Ringteil (12c) angeordnet ist, um jeglichen Kontakt des ersten Brückenabschnitts mit dem flexiblen Schlauch der flexiblen Verbindung zu verhindern.

3. Verbindungsschelle nach Anspruch 1 oder 2, wobei der erste Brückenabschnitt (31; 31'; 31") zwei Verbindungsseiten (CS) zur Verbindung mit dem ersten Paar von Backen (7a, 8a) beziehungsweise dem zweiten Paar von Backen (7b, 8b) aufweist, und wobei der erste Brückenabschnitt (31; 31'; 31") einen flachen, bogenförmigen Abschnitt umfasst, der Teil eines Brückenelements (BM1; BM1') ist, das gegenüber den beiden Verbindungsseiten erhöht ist, aufgrund zweier radialer Abstandselemente (JM1, JM2; JM1', JM2'), die sich jeweils zwischen einer der beiden Verbindungsseiten und dem ersten Brückenabschnitt (31; 31'; 31") erstrecken.

4. Verbindungsschelle nach einem der vorhergehenden Ansprüche, wobei der erste Brückenabschnitt (31; 31'; 31") eine radial innere Fläche (F31) aufweist, die eine konkave Krümmung oder ein konkaves Profil aufweist, betrachtet in einem Querschnitt parallel zur Richtung der gemeinsamen Längsachse (X).

5. Verbindungsschelle nach einem der vorhergehenden Ansprüche, ferner umfassend einen zweiten Brückenabschnitt (32), der:
- das erste zungenartige Element (23) fest mit dem zweiten zungenartigen Element (24) verbindet, und
- einen vorbestimmten Abstand zwischen dem ersten zungenartigen Element (23) und dem zweiten zungenartigen Element (24) aufrechterhält.

6. Verbindungsschelle nach Anspruch 5, wobei der erste Brückenabschnitt (31) mit einer ersten radialen Lasche (T1) versehen ist, wobei der zweite Brückenabschnitt (32) mit einer zweiten radialen Lasche (T2) versehen ist, so dass:
- ein erstes Schellenende (E1), das mit dem ersten zungenartigen Element (23) und dem zweiten zungenartigen Element (24) versehen ist, einerseits, und
- ein zweites Schellenende (E2), das mit dem ersten und dem zweiten Paar von Backen (7a, 8a, 7b, 8b) versehen ist, andererseits,
gleichzeitig unter Verwendung der ersten und zweiten radialen Lasche (T1, T2) bewegbar und in einer tangentialen Richtung ineinander schiebbar sind, wodurch sie miteinander verrastbar sind.

7. Verbindungsschelle nach Anspruch 5 oder 6, wobei der zweite Brückenabschnitt (32) eine innere Nut (CG) oder eine den ersten Brückenabschnitt (31; 31") führende Schiene begrenzt, wobei der zweite Brückenabschnitt (32) und der erste Brückenabschnitt (31; 31") in der geschlossenen Konfiguration in einer überlappenden Anordnung stehen, vorzugsweise wobei die zweite Brücke (32) zwischen dem ersten Paar von Backen (7a, 8a) und dem zweiten Paar von Backen (7b, 8b) eingesetzt ist.

8. Verbindungsschelle nach einem der vorhergehenden Ansprüche, wobei die Verbindungsschelle (1; 101; 101') eine anfängliche gespreizte Konfiguration aufweist, in welcher das erste zungenartige Element (23) entlang einer tangentialen Richtung von dem ersten Paar von Backen (7a, 8a) um einen ersten vorgegebenen Abstand beabstandet ist, während das zweite zungenartige Element (24) entlang der tangentialen Richtung von dem zweiten Paar von Backen (7b, 8b) um einen zweiten vorgegebenen Abstand beabstandet ist,
wobei der erste vorgegebene Abstand und der zweite vorgegebene Abstand gleich sind und geringer sind als ein konstanter Abstand (d4), gemessen entlang der Richtung der Längsachse (X), der zwischen dem ersten Ringteil (11c) und dem zweiten Ringteil (12c) begrenzt ist, wobei die tangentiale Richtung senkrecht zur Längsachse (X) steht.

9. Verbindungsschelle nach einem der vorhergehenden Ansprüche, wobei das erste zungenartige Element (23) und das zweite zungenartige Element (24) Teil eines weiteren Paars von Backen sind, das an einem Schellenende (E1) vorgesehen ist, welches gegenüber einem Schellenende (E2) liegt, das mit dem ersten Brückenabschnitt (31) versehen ist.

10. Verbindungsschelle nach Anspruch 9 in Abhängigkeit von Anspruch 5, wobei das erste zungenartige Element (23) und das zweite zungenartige Element (24) radial äußere Backen in dem genannten weiteren Paar von Backen sind,
und wobei der zweite Brückenabschnitt (32) bogenförmig ist, um in einen von dem ersten Brückenabschnitt (31) begrenzten Kanal oder eine Nut (C) eingesetzt zu werden.

11. Verbindungsschelle nach einem der vorhergehenden Ansprüche, wobei sowohl für die zwei ersten Verriegelungselemente (11f) als auch für die zwei zweiten Verriegelungselemente (12f):
- jedes Paar von Backen eine radial innere Backe (8a; 8b) mit einer radial äußeren Fläche umfasst, die mit einem der ersten und zweiten Zahnsätze (80; 80') versehen ist, der in einer geschlossenen Konfiguration der Verbindungsschelle (1; 101; 101') mit nach innen orientierten Zähnen zusammenwirkt, die Teil jeweils des ersten komplementären Zahnsatzes (TS1) beziehungsweise des zweiten komplementären Zahnsatzes (TS2) sind, wobei die nach innen orientierten Zähne (TS1, TS2) auf zwei radial inneren Flächen verteilt sind, nämlich:
- einer radial inneren Fläche des ersten zungenartigen Elements (23); und
- einer radial inneren Fläche des zweiten zungenartigen Elements (24).

12. Verbindungsschelle nach einem der vorhergehenden Ansprüche, wobei jedes von dem ersten Klemmelement (11) und dem zweiten Klemmelement (12) zwischen einer gespreizten Konfiguration und einer einstellbaren zurückgezogenen Konfiguration verformbar ist, wobei die zwei ersten Verriegelungselemente (11f) und die zwei zweiten Verriegelungselemente (12f) dazu ausgebildet sind, die zurückgezogene Konfiguration des ersten Klemmelements (11) beziehungsweise des zweiten Klemmelements (12) aufrechtzuerhalten,
wobei die Verbindungsschelle zwei einander gegenüberliegende Schellenenden (E1, E2) aufweisen kann und zwei parallele, ringförmige Halteflächen umfasst, zum Kontaktieren und Halten des flexiblen Schlauchs auf einem Widerhaken des Verbinders,
und wobei der erste Brückenabschnitt (31; 31'; 31"):
- einstückig mit einem Schellenende (E2) der beiden Schellenenden (E1, E2) ausgebildet ist;
- radial nach außen versetzt gegenüber den beiden ringförmigen Halteflächen ist, so dass der erste Brückenabschnitt (31; 31'; 31") entweder das andere, als einziger Block ausgebildete Schellenende (E1), das das erste zungenartige Element (23) und das zweite zungenartige Element (24) umfasst, führt, oder eine zwischen dem ersten zungenartigen Element (23) und dem zweiten zungenartigen Element (24) angeordnete und diese führende Schiene bildet, wobei diese getrennt in den ersten Zwischenraum beziehungsweise in den zweiten Zwischenraum einsetzbar sind.

13. Verbindungsschelle nach einem der vorhergehenden Ansprüche, die eine Widerhakenschelle aus nichtmetallischem Material bildet, zum Verbinden des flexiblen Schlauchs (T) mit einem Widerhakenanschlussstück, das den Widerhakenverbinder (9) definiert und ein erstes Ende aufweist, das an einer ein biopharmazeutisches Fluid enthaltenden Vorrichtung befestigbar oder in diese eingebunden ist, sowie ein zweites Ende, das in den flexiblen Schlauch einsetzbar ist, wobei das zweite Ende einen Widerhaken (19) aufweist, wobei das erste Klemmelement (11) und das zweite Klemmelement (12) Teile der Widerhakenschelle sind, die über dem zweiten Ende des Widerhakenanschlussstücks und dem Schlauch in Eingriff bringbar sind, wobei das erste Klemmelement (11) und das zweite Klemmelement (12) dazu ausgebildet sind, beiderseits des Widerhakens (19) angeordnet zu werden;
wobei der erste Brückenabschnitt (31; 31'; 31"), das erste Klemmelement (11) und das zweite Klemmelement (12) zu einem einzigen, aus Kunststoffmaterial hergestellten Teil gehören.

14. Fluidverbindungsanordnung (4), umfassend:
- einen Widerhakenverbinder (9) mit einem Widerhaken (19);
- einen flexiblen Schlauch (T) mit einem Verbindungsende, in das der Widerhakenverbinder (9) hineinragt, so dass eine umlaufende radiale Ausbuchtung (SB) infolge der Kompression des flexiblen Schlauchs (T) durch den Widerhaken (19) gebildet wird; und
- die Verbindungsschelle (1; 101; 101') nach einem der vorhergehenden Ansprüche, die um den flexiblen Schlauch (T) und den Widerhakenverbinder (9) angeordnet ist, um den flexiblen Schlauch gegen den Widerhakenverbinder (9) zu halten;
wobei die umlaufende radiale Ausbuchtung (SB) in einem ringförmigen Zwischenraum aufgenommen ist, der zwischen dem ersten Klemmelement (11) und dem zweiten Klemmelement (12) vorgesehen ist, wobei der erste Brückenabschnitt (31; 31'; 31") radial nach außen versetzt ist gegenüber den Ringteilen (11c, 12c), um nicht mit der umlaufenden radialen Ausbuchtung (SB) in Kontakt zu kommen oder mit dieser zu interferieren, wobei sich der erste Brückenabschnitt (31; 31'; 31") vollständig radial entfernt vom flexiblen Schlauch erstreckt.

15. Fluidverbindungsanordnung nach Anspruch 14, wobei der erste Brückenabschnitt (31; 31'; 31") radial nach außen versetzt ist, gegenüber den Ringteilen (11c, 12c), um sich radial mindestens so weit von dem flexiblen Schlauch (T) zu erstrecken wie ein Zahneingriffsbereich der ersten und zweiten Verriegelungselemente (11f, 12f).

16. Verfahren zum Verbinden eines flexiblen Schlauchs (T) mit einem Verbinder (9), der mit einem Widerhaken versehen ist, wobei das Verfahren umfasst:
- Bereitstellen des Verbinders (9), der in ein Ende des flexiblen Schlauchs (T) hineinragt, wodurch eine umlaufende radiale Ausbuchtung (SB) infolge der Kompression des flexiblen Schlauchs (T) durch einen Widerhaken (19) des Verbinders (9) gebildet wird;
- Bereitstellen einer Verbindungsschelle (1; 101; 101') nach einem der Ansprüche 1 bis 13 um den flexiblen Schlauch (T) und den Widerhakenverbinder herum, wobei die ersten Verriegelungselemente (11f) und die zweiten Verriegelungselemente (12f) der Verbindungsschelle miteinander verbunden und verriegelt werden, nachdem das erste Klemmelement (11) und das zweite Klemmelement (12) jeweils beiderseits der umlaufenden radialen Ausbuchtung (SB) positioniert wurden;
wobei der flexible Schlauch (T) durch die Verbindungsschelle (1; 101; 101') selektiv an zwei ringförmigen Klemmbereichen geklemmt wird, die entlang der Längsachse (X) um einen vorgegebenen Abstand voneinander beabstandet sind, aufgrund von zwei jeweiligen ringförmigen Kontakten des ersten Klemmelements (11) und des zweiten Klemmelements (12) mit dem flexiblen Schlauch (T).

## Revendications

1. Un collier de raccordement (1 ; 101 ; 101') pour serrer de manière étanche un raccordement de tube flexible, en particulier un raccordement de tube utilisant un raccord cranté (9), le collier de raccordement (1 ; 101 ; 101') comprenant :
- un premier élément de serrage (11), pourvu d'une première partie annulaire (11c), en forme de C, et de deux premiers éléments d'interverrouillage (11f) aux extrémités respectives de la première partie annulaire (11c), le premier élément de serrage formant un premier anneau de circonférence intérieure réglable dans une configuration fermée du premier élément de serrage ;
- un second élément de serrage (12) constitué d'une seconde partie annulaire (12c), en forme de C, et de deux seconds éléments d'interverrouillage (12f) aux extrémités respectives de la seconde partie annulaire (12c), le second élément de serrage formant un second anneau de circonférence intérieure réglable dans une configuration fermée du second élément de serrage ;
- une première portion de pontage (31 ; 31' ; 31") interposée entre le premier élément de serrage (11) et le second élément de serrage (12) ;
dans lequel le premier élément de serrage (11) et le second élément de serrage (12) présentent une structure annulaire, s'étendant chacune autour d'un axe longitudinal commun (X), pour former une paire de zones de serrage annulaires qui sont espacées ;
dans lequel les deux premiers éléments d'interverrouillage (11f) comprennent :
- une première paire de mâchoires (7a, 8a) espacées radialement pour définir un premier espace entre elles, comportant un premier jeu de dents (80) ;
- un premier élément de type languette (23) présentant un premier jeu complémentaire de dents (TS1), le premier élément de type languette (23) s'étendant selon une direction longitudinale de l'élément de type languette (At) ; et
- un espacement radial au niveau dudit premier espace de sorte que le premier élément de type languette (23) puisse s'engager et présente une configuration insérée à l'intérieur du premier espace, dans la configuration fermée du premier élément de serrage (11) ;
dans lequel les deux seconds éléments d'interverrouillage (12f) comprennent :
- une seconde paire de mâchoires (7b, 8b) espacées radialement pour définir un second espace entre elles, comportant un second jeu de dents (80') ;
- un second élément de type languette (24) présentant un second jeu complémentaire de dents (TS2), le second élément de type languette (24) s'étendant parallèlement au premier élément de type languette (23) ; et
- un espacement radial au niveau dudit second espace de sorte que le second élément de type languette (24) puisse s'engager et présente une configuration insérée à l'intérieur du second espace, dans la configuration fermée du second élément de serrage (12) ;
dans lequel la première portion de pontage (31 ; 31' ; 31") est une portion rigide ;
**caractérisé en ce que** la première portion de pontage (31 ; 31' ; 31")
- relie fixement la première paire de mâchoires (7a, 8a) à la seconde paire de mâchoires (7b, 8b), et
- maintient un espacement prédéterminé entre la première paire de mâchoires (7a, 8a) et la seconde paire de mâchoires (7b, 8b).

2. Le collier de raccordement selon la revendication 1, dans lequel la première portion de pontage (31 ; 31' ; 31") est agencée radialement à l'écart de la première partie annulaire (11c) et de la seconde partie annulaire (12c), pour empêcher tout contact de la première portion de pontage sur le tube flexible du raccordement flexible.

3. Le collier de raccordement selon la revendication 1 ou 2, dans lequel la première portion de pontage (31 ; 31' ; 31") présente deux côtés de raccordement (CS) pour la connexion avec la première paire de mâchoires (7a, 8a) et la seconde paire de mâchoires (7b, 8b), respectivement, et dans lequel la première portion de pontage (31 ; 31' ; 31") comprend une portion arquée plate qui fait partie d'un élément formant pont (BM1 ; BM1') surélevé par rapport aux deux côtés de raccordement, grâce à deux éléments d'espacement radial (JM1, JM2 ; JM1', JM2') qui s'étendent chacun, respectivement, entre l'un des deux côtés de raccordement et la première portion de pontage (31 ; 31' ; 31").

4. Le collier de raccordement selon l'une quelconque des revendications précédentes, dans lequel la première portion de pontage (31 ; 31' ; 31") présente une face radialement intérieure (F31) qui présente une courbure concave ou un profil concave tel que vu dans une section transversale parallèle à la direction de l'axe longitudinal commun (X).

5. Le collier de raccordement selon l'une quelconque des revendications précédentes, comprenant en outre une seconde portion de pontage (32) qui :
- relie fixement le premier élément de type languette (23) au second élément de type languette (24), et
- maintient un espacement prédéterminé entre le premier élément de type languette (23) et le second élément de type languette (24).

6. Le collier de raccordement selon la revendication 5, dans lequel la première portion de pontage (31) est pourvue d'une première languette radiale (T1), la seconde portion de pontage (32) étant pourvue d'une seconde languette radiale (T2), de sorte que :
- une première extrémité de collier de raccordement (E1), pourvue du premier élément de type languette (23) et du second élément de type languette (24), d'une part, et
- une seconde extrémité de collier de raccordement (E2), pourvue des première et seconde paires de mâchoires (7a, 8a, 7b, 8b), d'autre part,
soient mobiles simultanément au moyen des première et seconde languettes radiales (T1, T2) et puissent être poussées l'une dans l'autre selon une direction tangentielle, étant ainsi verrouillables l'une avec l'autre.

7. Le collier de raccordement selon la revendication 5 ou 6, dans lequel la seconde portion de pontage (32) délimite une rainure intérieure (CG) ou un rail guidant la première portion de pontage (31 ; 31"), la seconde portion de pontage (32) et la première portion de pontage (31 ; 31") étant dans une configuration de chevauchement dans la configuration fermée, de préférence le second pont (32) étant inséré entre la première paire de mâchoires (7a, 8a) et la seconde paire de mâchoires (7b, 8b).

8. Le collier de raccordement selon l'une quelconque des revendications précédentes, dans lequel le collier de raccordement (1 ; 101 ; 101') présente une configuration étendue initiale, dans laquelle le premier élément de type languette (23) est espacé, selon une direction tangentielle, de la première paire de mâchoires (7a, 8a) d'une première distance d'espacement prédéfinie, tandis que le second élément de type languette (24) est espacé, selon la direction tangentielle, de la seconde paire de mâchoires (7b, 8b) d'une seconde distance d'espacement prédéfinie,
dans lequel la première distance prédéfinie et la seconde distance prédéfinie sont égales et sont inférieures à une distance d'espacement constante (d4), mesurée selon la direction de l'axe longitudinal (X), délimitée entre la première partie annulaire (11c) et la seconde partie annulaire (12c), la direction tangentielle étant perpendiculaire à l'axe longitudinal (X).

9. Le collier de raccordement selon l'une quelconque des revendications précédentes, dans lequel le premier élément de type languette (23) et le second élément de type languette (24) font partie d'une autre paire de mâchoires, prévue dans une extrémité de collier de raccordement (E1) qui est à l'opposé d'une extrémité de collier de raccordement (E2) pourvue de la première portion de pontage (31).

10. Le collier de raccordement selon la revendication 9 lorsqu'elle dépend de la revendication 5, dans lequel le premier élément de type languette (23) et le second élément de type languette (24) sont des mâchoires radialement extérieures dans ladite autre paire de mâchoires,
et dans lequel la seconde portion de pontage (32) est arquée pour être insérée dans un canal ou une rainure (C) délimité(e) par la première portion de pontage (31).

11. Le collier de raccordement selon l'une quelconque des revendications précédentes, dans lequel, pour les deux premiers éléments d'interverrouillage (11f) et pour les deux seconds éléments d'interverrouillage (12f) également :
- chaque paire de mâchoires comprend une mâchoire radialement intérieure (8a ; 8b) présentant une face radialement extérieure pourvue de l'un des premier et second jeux de dents (80 ; 80') qui coopère, dans une configuration fermée du collier de raccordement (1 ; 101 ; 101'), avec des dents orientées vers l'intérieur qui font partie de l'un du premier jeu complémentaire de dents (TS1) et du second jeu complémentaire de dents (TS2), respectivement,
les dents orientées vers l'intérieur (TS1, TS2) étant réparties sur deux faces radialement intérieures qui sont :
- une face radialement intérieure du premier élément de type languette (23) ; et
- une face radialement intérieure du second élément de type languette (24).

12. Le collier de raccordement selon l'une quelconque des revendications précédentes, dans lequel chacun du premier élément de serrage (11) et du second élément de serrage (12) est déformable entre une configuration étendue et une configuration rétractée réglable, les deux premiers éléments d'interverrouillage (11f) et les deux seconds éléments d'interverrouillage (12f) étant configurés pour maintenir la configuration rétractée, respectivement du premier élément de serrage (11) et du second élément de serrage (12),
dans lequel le collier de raccordement peut présenter deux extrémités de collier de raccordement opposées (E1, E2) et comprend deux surfaces de retenue annulaires, parallèles, destinées à venir en contact avec le tube flexible et à le maintenir sur un ergot du raccord,
et dans lequel la première portion de pontage (31 ; 31' ; 31") est :
- construite d'un seul tenant avec l'une (E2) des deux extrémités de collier de raccordement (E1, E2) ;
- espacée radialement vers l'extérieur par rapport aux deux surfaces de retenue annulaires, de sorte que la première portion de pontage (31 ; 31' ; 31") guide soit l'autre extrémité de collier de raccordement (E1) formée en un seul bloc qui comprend le premier élément de type languette (23) et le second élément de type languette (24), soit forme un rail interposé entre le premier élément de type languette (23) et le second élément de type languette (24) et les guidant, ceux-ci étant insérables séparément dans le premier espace et dans le second espace, respectivement.

13. Le collier de raccordement selon l'une quelconque des revendications précédentes, formant un collier à ergot en matériau non métallique destiné à raccorder le tube flexible (T) à un raccord à ergot qui définit le raccord cranté (9) et présente une première extrémité pouvant être fixée à un dispositif contenant un fluide biopharmaceutique ou incluse dans celui-ci, et une seconde extrémité insérable dans le tube flexible, la seconde extrémité présentant un ergot (19), le premier élément de serrage (11) et le second élément de serrage (12) étant des parties du collier à ergot qui peuvent s'engager sur la seconde extrémité du raccord à ergot et sur le tube, le premier élément de serrage (11) et le second élément de serrage (12) étant adaptés pour être disposés de part et d'autre de l'ergot (19) ;
dans lequel la première portion de pontage (31 ; 31' ; 31"), le premier élément de serrage (11) et le second élément de serrage (12) appartiennent à une seule pièce réalisée en matériau plastique.

14. Un ensemble de raccordement fluidique (4), comprenant :
- un raccord cranté (9) présentant un ergot (19) ;
- un tube flexible (T) présentant une extrémité de raccordement dans laquelle le raccord cranté (9) fait saillie, de sorte qu'un bourrelet radial circonférentiel (SB) est formé en raison de la compression du tube flexible (T) par l'ergot (19) ; et
- le collier de raccordement (1 ; 101 ; 101') selon l'une quelconque des revendications précédentes, disposé autour du tube flexible (T) et du raccord cranté (9), pour maintenir le tube flexible contre le raccord cranté (9) ;
dans lequel le bourrelet radial circonférentiel (SB) est logé dans un espace annulaire prévu entre le premier élément de serrage (11) et le second élément de serrage (12), la première portion de pontage (31 ; 31' ; 31") étant décalée radialement vers l'extérieur par rapport aux parties annulaires (11c, 12c), afin de ne pas entrer en contact avec le bourrelet radial circonférentiel (SB) ni interférer avec celui-ci, la première portion de pontage (31 ; 31' ; 31") s'étendant entièrement radialement à l'écart du tube flexible.

15. L'ensemble de raccordement fluidique selon la revendication 14, dans lequel la première portion de pontage (31 ; 31' ; 31") est décalée radialement vers l'extérieur, par rapport aux parties annulaires (11c, 12c), de manière à s'étendre radialement au moins aussi loin du tube flexible (T) qu'une zone d'engagement de dents des premier et second éléments d'interverrouillage (11f, 12f).

16. Un procédé de raccordement d'un tube flexible (T) à un raccord (9) qui est cranté, le procédé comprenant :
- la fourniture du raccord (9) faisant saillie dans une extrémité du tube flexible (T), moyennant quoi un bourrelet radial circonférentiel (SB) est formé en raison de la compression du tube flexible (T) par un ergot (19) du raccord (9) ;
- la fourniture d'un collier de raccordement (1 ; 101 ; 101') selon l'une quelconque des revendications 1 à 13 autour du tube flexible (T) et du raccord cranté, les premiers éléments d'interverrouillage (11f) et les seconds éléments d'interverrouillage (12f) du collier de raccordement étant reliés et verrouillés les uns aux autres après positionnement du premier élément de serrage (11) et du second élément de serrage (12) respectivement de part et d'autre du bourrelet radial circonférentiel (SB) ;
dans lequel le tube flexible (T) est serré par le collier de raccordement (1 ; 101 ; 101') sélectivement au niveau de deux zones de serrage annulaires qui sont espacées l'une de l'autre d'une distance donnée le long de l'axe longitudinal (X), en raison de deux contacts annulaires respectifs du premier élément de serrage (11) et du second élément de serrage (12) sur le tube flexible (T).
